# EUROPEAN PATENT APPLICATION

(11) **EP 3 276 542 A1**
(43) Date of publication of application: **31.01.2018**
(21) Application number: 15889219.0
(22) Date of filing: 17.04.2015
(51) Int. Cl.: G06N 3/10

(54) **PROCESSING SYSTEM AND PROGRAM**

(71) Applicant: Cocoro SB Corp., Tokyo 105-7309 (JP)
(72) Inventor: TSUTSUI Takashi, Tokyo 105-7317 (JP); TOMONAGA Kosuke, Tokyo 105-7317 (JP); MIHIRA Yuma, Tokyo 105-7317 (JP)
(74) Representative: Michalski Hüttermann & Partner Patentanwälte mbB
(86) International application number: PCT/JP2015/061840
(87) International publication number: WO 2016/166881

(57) **Abstract**

A processing system that processes parameters of a plurality of artificial neurons and artificial synapses constituting a neural network, the processing system including: a storing unit storing definition information defining a state of a control target for each artificial neuron of the plurality of artificial neurons; a processing unit processing parameter values of each artificial neuron of the plurality of artificial neurons and parameter values of one or more artificial synapses connected to inputs of each artificial neuron using a data access structure accessible data unit by data unit, the data unit being collective for each artificial neuron; and an operation determining unit determining operation of the control target based on: an activation state of at least some artificial neurons of the plurality of artificial neurons specified by parameter values of the at least some artificial neurons; and a state defined by the at least some artificial neurons.

## Description

### BACKGROUND

### 1. TECHNICAL FIELD

The present invention relates to a processing system and program.

### 2. RELATED ART

An emotion generating apparatus including a neural net that receives an input of user information, equipment information and a current emotional state of a user him/herself to output a next emotional state has been known (please see Patent Document 1, for example). Also, a technique to store spatiotemporal patterns in an associative memory including a plurality of electronic neurons having a layer neural net relation having directive artificial synapse connectivity has been known (please see Patent Document 2, for example).

### [Prior Art Documents]

### [Patent Documents]

[Patent Document 1] Japanese Patent Application Publication No. H10-254592
[Patent Document 2] Japanese Translation of PCT International Patent Application No. 2013-535067

There has been a drawback that parameters of individual artificial neurons and artificial synapses constituting a neural network cannot be processed efficiently.

### SUMMARY

A first aspect of the present invention provides processing system that processes parameters of a plurality of artificial neurons and a plurality of artificial synapses that constitute a neural network, the processing system including:
a storing unit that stores definition information defining a state of a control target for each artificial neuron of the plurality of artificial neurons;
a processing unit that processes parameter values of each artificial neuron of the plurality of artificial neurons and parameter values of one or more artificial synapses connected to inputs of each artificial neuron using a data access structure accessible data unit by data unit, the data unit being collective for each artificial neuron; and
an operation determining unit that determines operation of the control target based on: an activation state of at least some artificial neurons of the plurality of artificial neurons specified by parameter values of the at least some artificial neurons; and a state defined by the at least some artificial neurons.

A process performed by the processing unit may include:
updating parameter values of the plurality of artificial neurons and the artificial synapses for each artificial neuron;
presenting, to a user, current parameter values of the plurality of artificial neurons and the artificial synapses collectively for each artificial neuron; and
presenting, to a user, parameter values of the plurality of artificial neurons and the artificial synapses collectively for each artificial neuron, and accepting an input of a parameter value from the user.

The processing unit may:
present, to a user and in a format in which a plurality of rows of the plurality of artificial neurons are associated with a plurality of rows of a table, parameter values of each artificial neuron of the plurality of artificial neurons and parameter values of one or more artificial synapses connected to inputs of each artificial neuron; and
accept a user input to the table for altering the presented parameter values.

The processing unit may:
generate a data structure that is accessible data unit by data unit, the data unit being collective for parameter values of each artificial neuron of the plurality of artificial neurons and parameter values of one or more artificial synapses connected to inputs of each artificial neuron; and
access, for each artificial neuron of the plurality of artificial neurons and through the data structure, parameter values of each artificial neuron of the plurality of artificial neurons and parameter values of one or more artificial synapses connected to inputs of each artificial neuron, and updates, over time, parameter values of each artificial neuron of the plurality of artificial neurons and parameter values of one or more artificial synapses connected to inputs of each artificial neuron.

The processing unit may present, to a user and in a format in which a plurality of rows of the plurality of artificial neurons are associated with a plurality of rows of a table, parameter values of each artificial neuron of the plurality of artificial neurons and parameter values of one or more artificial synapses connected to inputs of each artificial neuron that are updated over time.

Parameters of the artificial neurons may include at least one of parameters specifying: a threshold; an activation state; a clock time when activation occurred last time; an output, an output at a clock time when activation occurred last time; and time evolution of an output at the time of activation,
parameters of the artificial synapses may include:
at least one of parameters specifying: a coefficient of connection to a connected artificial neuron; a simultaneous activation clock time which is a clock time when two artificial neurons connected by the artificial synapse are simultaneously activated last time; a coefficient of connection at the simultaneous activation clock time; and time evolution of a coefficient of connection after simultaneous activation occurred; and
discrimination information of the artificial synapse.

The plurality of artificial neurons may include an endocrine artificial neuron which is an artificial neuron for which a state of generation of an endocrine substance is defined,
the storing unit further may store influence definition information specifying influence of at least one of an output and activation state of the endocrine artificial neuron on a parameter of at least one of an artificial synapse and another artificial neuron not directly connected to the endocrine artificial neuron by an artificial synapse, and
based on the at least one of the output and activation state of the endocrine artificial neuron and the influence definition information, the processing unit may update the parameter of the at least one of the artificial synapse and the other artificial neuron not directly connected to the endocrine artificial neuron by the artificial synapse.

The parameter of the other artificial neuron which the at least one of the output and activation state of the endocrine artificial neuron has influence on may include at least one of parameters specifying a threshold, activation state, and time evolution of an output at the time of activation of the other artificial neuron, and
the parameter of the artificial synapse which the at least one of the output and activation state of the endocrine artificial neuron has influence on may include at least one of parameters specifying a coefficient of connection of the artificial synapse, and a time evolution of a coefficient of connection after two artificial neurons connected by the artificial synapse are simultaneously activated last time.

The plurality of artificial neurons may further include an emotion artificial neuron which is an artificial neuron for which a current emotion of the control target is defined,
the influence definition information may include information specifying influence that an activation state of an endocrine artificial neuron related to reward system has on a threshold of the emotion artificial neuron, and
the processing unit may update the threshold of the emotion artificial neuron according to the influence definition information if the endocrine artificial neuron is activated.

The processing unit may update parameters of some artificial neurons of the plurality of artificial neurons at a higher frequency than an update frequency of parameters of other artificial neurons.

The processing unit may update the parameters of the some artificial neurons at a higher frequency than an update frequency of parameters of other artificial neurons if a resource amount available for arithmetic operation at the processing system is smaller than a value specified in advance.

A preference order may be allocated in advance to the plurality of artificial neurons, and
the processing unit may select, from the plurality of artificial neurons and according to the preference order, some artificial neurons parameters of which can be updated within a range of a resource amount available for arithmetic operation at the processing system, and updates the parameters of the selected some artificial neurons at a higher frequency than an update frequency of parameters of other artificial neurons.

The neural network may include one or more undefined artificial neurons which are artificial neurons for which states of the control target are not defined, and
if an endocrine artificial neuron related to reward system is activated, the processing unit may increase a coefficient of connection of an artificial synapse connected to one or more undefined artificial neurons that connects, among the undefined artificial neurons, the endocrine artificial neuron and another artificial neuron which is simultaneously in an activated state with the endocrine artificial neuron.

Among routes that connect the endocrine artificial neuron related to reward system and another artificial neuron that is simultaneously in an activated state with the endocrine artificial neuron, the processing unit may more preferentially select a route with a shorter distance between artificial neurons that is calculated taking into consideration a coefficient of connection of an artificial synapse connected to the undefined artificial neuron, and increases a coefficient of connection of an artificial synapse connected to a undefined artificial neuron that provides the selected route.

A second aspect of the present invention provides a program for causing a computer to function as the above-mentioned processing system.

The summary clause does not necessarily describe all necessary features of the embodiments of the present invention. The present invention may also be a sub-combination of the features described above.

### BRIEF DESCRIPTION OF THE DRAWINGS

FIG. 1 schematically shows one example of a system 20 according to the present embodiment.
FIG. 2 schematically shows a block configuration of a server 200, a user terminal 100 and a robot 40.
FIG. 3 schematically shows a neural network 300.
FIG. 4 schematically shows a parameter edit screen displayed on the user terminal 100.
FIG. 5 schematically shows an operation flow of the server 200 performed when the robot 40 is activated or reset.
FIG. 6 is a figure for schematically explaining calculation of a coefficient of connection of an artificial synapse.
FIG. 7 schematically shows time evolution of a coefficient of connection in a case where a function hₜ^{ij} is defined as an increase-decrease parameter of the coefficient of connection.
FIG. 8 schematically shows time evolution of a coefficient of connection observed when simultaneous firing occurs further at a clock time t2.
FIG. 9 schematically shows another example of an increase-decrease function of a coefficient of connection.
FIG. 10 schematically shows influence definition information defining chemical influence on a parameter.
FIG. 11 shows a flowchart about calculation of an output and status.
FIG. 12 is a figure for schematically explaining an example about calculation of an output in a case where an artificial neuron does not fire.
FIG. 13 is a figure for schematically explaining an example about calculation of an output in a case where an artificial neuron fires.
FIG. 14 schematically shows time evolution of a coefficient of connection in a case where a function is defined as an increase-decrease parameter of an artificial neuron.
FIG. 15 schematically shows another example of a function as an increase-decrease parameter.
FIG. 16 schematically shows an example of a screen of a parameter viewer displayed on the user terminal 100.
FIG. 17 schematically shows a screen presented if a neural network is to be edited graphically.
FIG. 18 is one example of an edit screen on which an artificial synapse is edited.
FIG. 19 schematically shows an example about a display of an output of an artificial neuron.
FIG. 20 schematically shows an example about a display showing how it appears when an artificial synapse propagates an electrical signal.
FIG. 21 schematically shows an example about a display of a state where artificial neurons are connected by an artificial synapse.
FIG. 22 schematically shows an example about a display of an arrangement of artificial neurons.
FIG. 23 schematically shows an example about a display of a range of artificial neurons that an endocrine artificial neuron has influence on.
FIG. 24 schematically shows preferential artificial neuron information specifying a preference order of calculation of artificial neuron parameters.
FIG. 25 schematically shows a software architecture according to the system 20.
FIG. 26 schematically shows a state before update calculation is performed on a plurality of artificial neurons.
FIG. 27 shows a method of performing processes of updating parameter values in parallel by multiprocessing.
FIG. 28 schematically shows a calculation state in the middle of the update calculation.
FIG. 29 schematically shows a configuration of a neural network for performing control in a distributed manner among subsystems.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

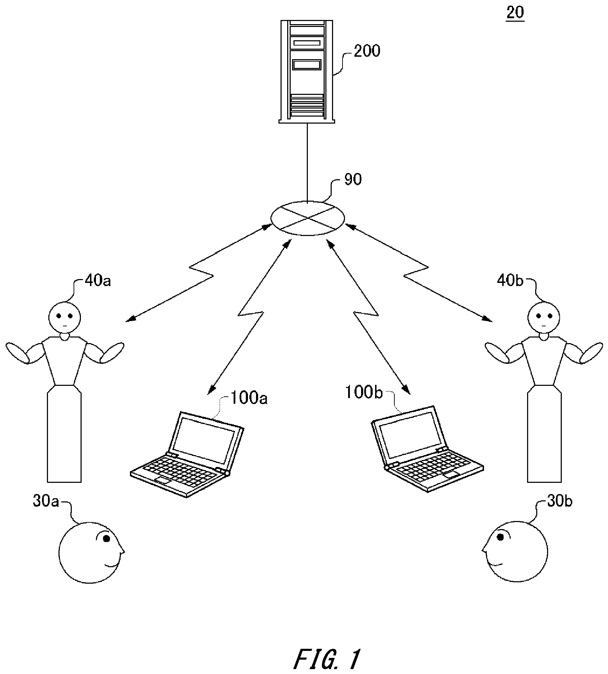

FIG. 1 schematically shows one example of a system 20 according to the present embodiment. The system 20 includes a server 200, a user terminal 100a, a user terminal 100b, a robot 40a and a robot 40b, and the server 200. The user terminal 100a, user terminal 100b, robot 40a and robot 40b communicate with the server 200 through a communication network 90 to exchange information.

Note that a user 30a is a user of the robot 40a and the user terminal 100a. A user 30b is a user of the robot 40b and the user terminal 100b. The robot 40b has approximately identical functions as those of the robot 40a. Also, the user terminal 100b has approximately identical functions as those of the user terminal 100a. Therefore, the system 20 is explained, referring to the robot 40a and the robot 40b collectively as a robot 40, and to the user terminal 100a and the user terminal 100b collectively as a user terminal 100.

The system 20 processes parameters of a neural network for determining the state of the robot 40. Parameters of a neural network include parameters of a plurality of artificial neurons and a plurality of artificial synapses constituting the neural network.

Specifically, the user terminal 100 sets initial values of parameters of a neural network based on an input from the user 30, and transmits them to the server 200. The robot 40 transmits, to the server 200, sensor information obtained through detection by a sensor provided to the robot 40. The server 200 uses the neural network based on the initial value information of the neural network and the sensor information acquired from the robot 40 to determine the state of the robot 40. For example, the server 200 uses the neural network to calculate a situation around the robot 40, an emotion of the robot 40 itself, and the state of generation of an endocrine substance of the robot 40 itself. Then, the server 200 determines action details of the robot 40 based on the situation around the robot 40, the emotion of the robot 40 itself, and the state of generation of the endocrine substance of the robot 40 itself. Note that an endocrine substance means a substance that is secreted in a body and conveys signals, such as a neurotransmitter, a hormone or the like. Also, "endocrine" means that such an endocrine substance is secreted in a body.

For example, if having judged that it is a state where an endocrine substance corresponding to sleepiness is generated, the server 200 causes the robot 40 to take action that it takes when it is sleepy. Also, if having judged that it is a state where an emotion of pleasantness occurs, the server 200 causes the robot 40 to produce a phrase representing the pleasantness.

Note that an endocrine substance of the robot 40 itself is one form of information that influences action of the robot 40, but does not mean that the robot 40 actually generates such an endocrine substance. An emotion of the robot 40 itself is likewise one form of information that influences action of the robot 40, but does not mean that the robot 40 is actually feeling such an emotion.

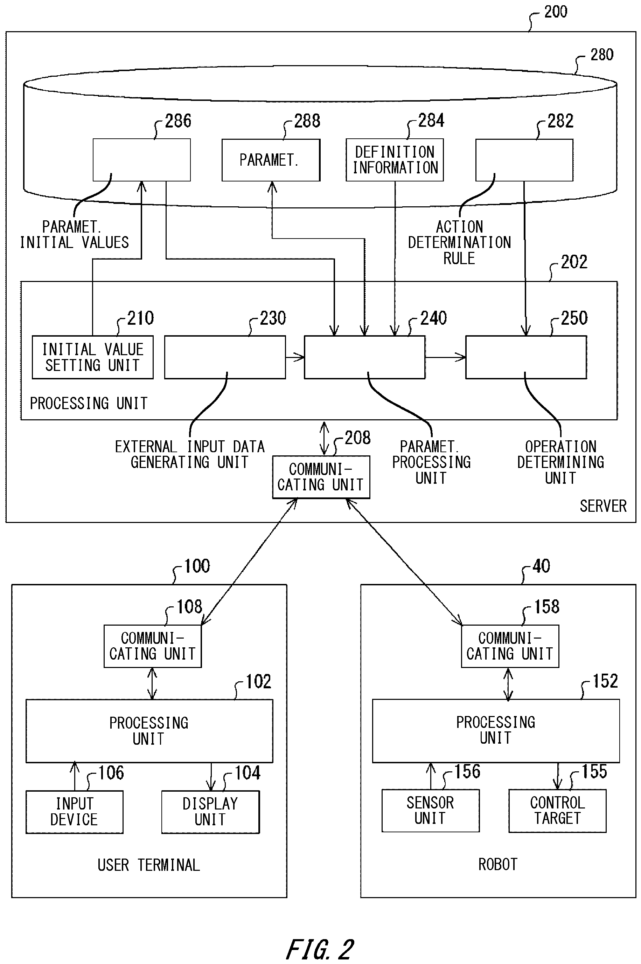

FIG. 2 schematically shows a block configuration of the server 200, the user terminal 100 and the robot 40. The user terminal 100 has a processing unit 102, a display unit 104, an input device 106 and a communicating unit 208. The robot 40b has a sensor unit 156, a processing unit 152, a control target 155 and a communicating unit 158. The server 200 has a processing unit 202, a storing unit 280 and a communicating unit 208. The processing unit 202 includes an initial value setting unit 210, an external input data generating unit 230, a parameter processing unit 240 and an operation determining unit 250. The storing unit 280 stores an action determination rule 282, definition information 284, parameter initial values 286 and latest parameters 288.

In the user terminal 100, the input device 106 accepts an input of an initial value of a parameter of a neural network from the user 30 and outputs it to the processing unit 102. The processing unit 102 is formed of a processor such as a CPU. The processing unit 102 causes the initial value of the parameter acquired from the input device 106 to be transmitted from the communicating unit 108 to the server 200. The communicating unit 108 receives the parameter of the neural network from the server 200. The processing unit 102 causes the parameter received by the communicating unit 108 to be displayed on the display unit 104.

In the robot 40, the sensor unit 156 includes various types of sensor such as a camera, 3D depth sensor, microphone, a touch sensor, laser range finder, or ultrasonic range finder. Sensor information obtained through detection by the sensor unit 156 is output to the processing unit 152. The processing unit 152 is formed of a processor such as a CPU. The processing unit 152 causes the sensor information acquired from the sensor unit 156 to be transmitted from the communicating unit 158 to the server 200. The communicating unit 158 receives information indicating operation details from the server 200. The processing unit 152 controls the control target 155 based on the operation details received by the communicating unit 158. The control target 155 includes a speaker, motors to drive respective units of the robot 40, display device, light-emitting device or the like. As one example, if information indicating details about a phrase to be produced is received from the server 200, the processing unit 152 causes a sound or voice to be output from the speaker according to the received details about a phrase to be produced.

At the server 200, the communicating unit 208 outputs, to the processing unit 202, the information received from the user terminal 100 or robot 40. The initial value setting unit 210 stores the initial value of the parameter received at the communicating unit 208 in the parameter initial values 286 in the storing unit 280. The external input data generating unit 230 processes the sensor information received by the communicating unit 208 to generate input information from the outside of the neural network, and outputs it to the parameter processing unit 240.

The parameter processing unit 240 performs a process on the basis of the neural network based on the parameters 288 and the definition information 284 of the neural network that are stored in the storing unit 280. The neural network is a model for artificially realizing some of brain functions of a living form by means of processes of a calculator. First, here, the technical background and problems about neural networks are explained.

A brain is considered as having two roughly classified functions. One of them is a function to perform various information processing to memorize, learn, predict, plan and so on, and the other one is an information processing regulatory function.

Information processing in a brain is considered as being realized by a vast number of neurons that are linked by synaptic connection. A human brain is considered as having more than 100 billion neurons present therein overall. On the other hand, the information processing regulatory function is considered as being realized by a relatively small number of neurons that are present at a particular region of a human brain like, for example, a wide range regulatory system of the brain. Specifically, neurons at a particular region of a brain have axons that do not have particular, well-defined destination neurons, but are branched toward a wide range of regions of the brain, and the information processing regulatory function is considered as being realized due to effects of various neurotransmitters released from the axons. The wide range regulatory system of a human is considered as having approximately several thousand neurons present therein. That is, each of a relatively small number of neurons that are present in a particular region of a brain is in contact with more than one hundred thousand other neurons, and the information processing regulatory function is considered as being realized due to neurotransmitters released by neurons of the particular region of the brain having effects not only on synapse gaps but also on numerous neurons in the brain.

Examples of information processing in a brain include a process on visual information in the visual cortex of a human. It is considered that visual information of a human is transmitted from a retina through an optic nerve to the primary visual cortex. Starting there and in the dorsal pathway, information processing about movement is performed, and information processing about information other than movement such as facial recognition is performed in the ventral pathway. On the other hand, examples of the information processing regulatory function include information processing performed when a human is feeling sleepiness. Occurrence of sleepiness is considered as being related to a wide range regulatory system that releases neurotransmitters such as acetylcholine, noradrenalin or serotonin. Thereby, a command like sleepiness can be a message to be received by a wide range of regions of a brain as in decision-making.

Here, in order to artificially realize some brain functions, it assumed that, as an example of neural networks, a network consists of a plurality of artificial neurons connected by artificial synapses. Application examples in this example of neural networks include data clustering using pattern recognition or a self-organizing map on the basis of deep learning, or the like, and it can be said that they artificially realize information processing of a brain such as image recognition or vocabulary classification.

Hebbian theory or a learning rule on the basis of spike timing-dependent plasticity (STDP) can be applied to a neural network. According to Hebbian theory, if firing of a neuron causes another neuron to fire, the connection between these two neurons is strengthened. Based on Hebbian theory, the process of strengthening connection by an artificial synapse if simultaneous firing occurs to artificial neurons prior and posterior to the artificial synapse can be incorporated into a neural network. STDP is a phenomenon in which strengthening/weakening of a synapse is dependent on the order of spike generation timing of neurons prior and posterior to the synapse. Based on STDP, a process of: strengthening connection of an artificial synapse if a prior neuron to the artificial synapse fires preceding firing of a posterior neuron to the artificial synapse; and weakening connection of the artificial synapse if the posterior artificial neuron to the artificial synapse fires preceding firing of the prior artificial neuron to the artificial synapse can be incorporated into a neural network. Also, there is a learning rule about a self-organizing map in which, in a neural network formed of a plurality of artificial neurons, a winner vector closest to an input vector is selected from weight vectors, and weighting is updated so that it becomes closer to the input vector.

Note that in an example of neural networks as in Patent Document 1 where an emotion label is output from a plurality of pieces of sensory information, even if inputs are the same, it may be possible in some cases to output different emotion labels depending on emotion labels and the inputs by feeding back emotion labels, but the neural network in Patent Document 1 is not configured to be able to incorporate such a process. Also, in the neural network in Patent Document 1, there are no relations between emotions and endocrine substances such as neurotransmitters; also, information processing is never regulated by emotions.

Apart from the information processing realized by the neural network described in Patent Document 1, or various information processing such as pattern recognition or data clustering realized by the above-mentioned example of the neural network, there are three problems that should be solved in order to realize a function of regulating information processing while properties of artificial neurons or artificial synapses dynamically change at part of a neural network due to an artificial endocrine substance such as a neurotransmitter being secreted in a wide range of regions in a brain. That is, first, in a situation where there are many hypotheses about operation principles of brain functions because most of them are not made clear, behavior of a neural network cannot be confirmed efficiently like an analog computer by connecting artificial neurons with artificial synapses through trial and error. Second, regardless of the fact that there are some equation models proposed that have different hysteresis characteristics about action potential or synaptic connection of neurons at various brain regions, equations having hysteresis or parameters of equations cannot be described efficiently for each artificial neuron or artificial synapse. Third, behavior of parameters of numerous artificial neurons or artificial synapses dynamically changing at part of a neural network due to an artificial endocrine substance being secreted in a wide range of regions in a brain cannot be simulated efficiently by large-scale calculation, and it cannot be processed efficiently even by a mutiprocess-multithreading process or distributed computing. In the following, operation of the system 20 is explained in more detail in relation to the above-mentioned technical background and problems about neural networks.

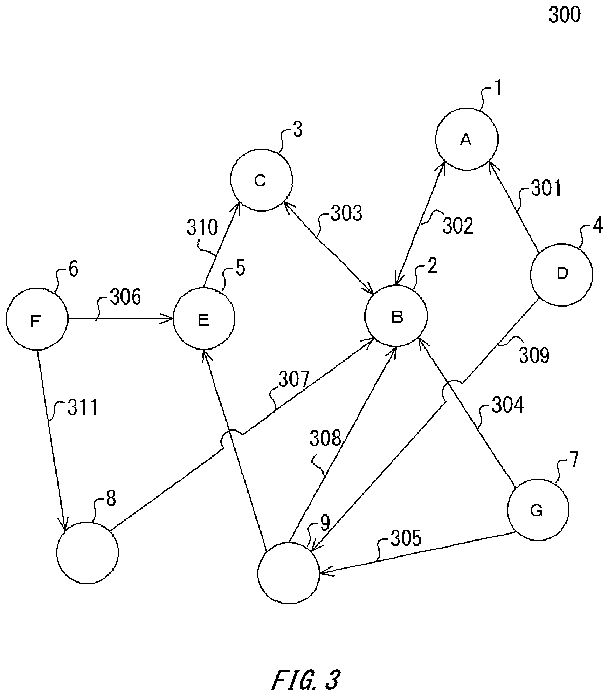

FIG. 3 schematically shows a neural network 300. The neural network 300 includes a plurality of artificial neurons including an artificial neuron 1, artificial neuron 2, artificial neuron 3, artificial neuron 4, artificial neuron 5, artificial neuron 6, artificial neuron 7, artificial neuron 8 and artificial neuron 9. The neural network 300 includes a plurality of artificial synapses including an artificial synapse 301, artificial synapse 302, artificial synapse 303, artificial synapse 304, artificial synapse 305, artificial synapse 306, artificial synapse 307, artificial synapse 308, artificial synapse 309, artificial synapse 310 and artificial synapse 311. Artificial neurons correspond to neurons in a living form. Artificial synapses correspond to synapses in a living form.

The artificial synapse 301 connects the artificial neuron 4 and the artificial neuron 1. The artificial synapse 301 is an artificial synapse connecting them unidirectionally. The artificial neuron 4 is an artificial neuron connected to an input of the artificial neuron 1. The artificial synapse 302 connects the artificial neuron 1 and the artificial neuron 2. The artificial synapse 302 is an artificial synapse connecting them bidirectionally. The artificial neuron 1 is an artificial neuron connected to an input of the artificial neuron 2. The artificial neuron 2 is an artificial neuron connected to an input of the artificial neuron 1.

Note that in the present embodiment, an artificial neuron is represented by N, and an artificial synapse is represented by S, in some cases. Also, each artificial neuron is discriminated by a superscript number as the discrimination character. A given artificial neuron is in some cases represented using an integer i or j as the discrimination number. For example, Nⁱ represents a given artificial neuron.

Also, an artificial synapse is in some cases discriminated using respective discrimination numbers i and j of two artificial neurons connected to the artificial synapse. For example, S⁴¹ represents an artificial synapse connecting N¹ and N⁴. Generally, S^{ij} represents an artificial synapse that inputs an output of Nⁱ to N^{j}. Note that S^{ji} represents an artificial synapse that inputs an output of N^{j} to Nⁱ.

In FIG. 3, A to G represent that the state of the robot 40 is defined. The state of the robot 40 includes an emotion of the robot 40, the state of generation of an endocrine substance, a situation around the robot 40, and the like. As one example, N⁴, N⁶ and N⁷ are concept artificial neurons for which concepts representing the situation of the robot 40 are defined. For example, N⁴ is a concept artificial neuron to which a situation "a bell rang" is allocated. N⁶ is a concept artificial neuron to which a situation "charging has started" is allocated. N⁷ is a concept artificial neuron to which a situation "the power storage amount is equal to or lower than a threshold" is allocated.

N¹ and N³ are emotion artificial neurons for which emotions of the robot 40 are defined. N¹ is an emotion artificial neuron to which an emotion "pleased" is allocated. N³ is an emotion artificial neuron to which an emotion "sad" is allocated.

N² and N⁵ are endocrine artificial neurons for which endocrine states of the robot 40 are defined. N⁵ is an endocrine artificial neuron to which a dopamine-generated state is allocated. Dopamine is one example of endocrine substances concerning reward system. That is, N⁵ is one example of endocrine artificial neurons concerning reward system. N² is an endocrine artificial neuron to which a serotonin-generated state is allocated. Serotonin is one example of endocrine substances concerning sleep system. That is, N² is one example of endocrine artificial neurons concerning sleep system.

Information defining the state of the robot 40 like the ones mentioned above is stored in the definition information 284 in the storing unit 280, for each artificial neuron of the plurality of artificial neurons constituting the neural network. In this manner, the neural network 300 includes concept artificial neurons, emotion artificial neurons, and endocrine artificial neurons. The concept artificial neurons, emotion artificial neurons and endocrine artificial neurons are artificial neurons for which meanings such as concepts, emotions or endocrines are defined explicitly. Such artificial neurons are in some cases called explicit artificial neurons.

In contrast to this, N⁸ and N⁹ are artificial neurons for which the state of the robot 40 is not defined. Also, N⁸ and N⁹ are artificial neurons for which meanings such as concepts, emotions or endocrines are not defined explicitly. Such artificial neurons are in some cases called implicit artificial neurons.

Parameters of the neural network 300 include Iₜⁱ which is an input to each Nⁱ of the neural network, Eₜⁱ which is an input from the outside of the neural network to Nⁱ, parameters of Nⁱ and parameters of Sⁱ.

The parameters of Nⁱ include Sₜⁱ representing the status of Nⁱ, Vⁱmₜ representing an output of the artificial neuron represented by Nⁱ, Tⁱₜ representing a threshold for firing of Nⁱ, t_{f} representing a last firing clock time which is a clock time when Nⁱ fired last time, Vⁱm_{tf} representing an output of the artificial neuron Nⁱ at the last firing clock time, and aₜⁱ, bₜⁱ and hₜⁱ which are increase-decrease parameters of outputs. The increase-decrease parameters of outputs are one example of parameters specifying time evolution of outputs at the time of firing of an artificial neuron. Note that in the present embodiment, a subscript t represents that the parameter provided with the subscript is a parameter that can be updated along with the lapse of clock time.

The parameters of S^{ij} include BSₜ^{ij} representing a coefficient of connection of an artificial synapse of S^{ij}, t_{cf} representing a last simultaneous firing clock time which is a clock time when Nⁱ and N^{j} connected by S^{ij} fired simultaneously last time, BS^{ij}_{tcf} representing a coefficient of connection at the last simultaneous firing clock time, and aₜ^{ij}, bₜ^{ij} and hₜ^{ij} which are increase-decrease parameters of the coefficients of connection. The increase-decrease parameters of the coefficients of connection are one example of parameters specifying time evolution of the coefficients of connection after two artificial neurons connected by an artificial synapse fired simultaneously last time.

The parameter processing unit 240 updates the above-mentioned parameters based on an input from the external input data generating unit 230 and the neural network to determine the activation state of each artificial neuron. The operation determining unit 250 determines operation of the robot 40 based on: the activation states of at least some artificial neurons specified by values of parameters of at least some artificial neurons among a plurality of artificial neurons in the neural network; and states defined for at least some artificial neurons by the definition information 284. Note that an activation state may either be an activated state or an inactivated state. In the present embodiment, to be activated is called "to fire" and being inactivated is called "unfiring", in some cases. Note that, as mentioned below, the "firing" state is classified into a "rising phase" and a "falling phase" depending on whether or not an output is on the rise. "Unfiring", and a "rising phase" and a "falling phase" are represented by a status Sₜⁱ.

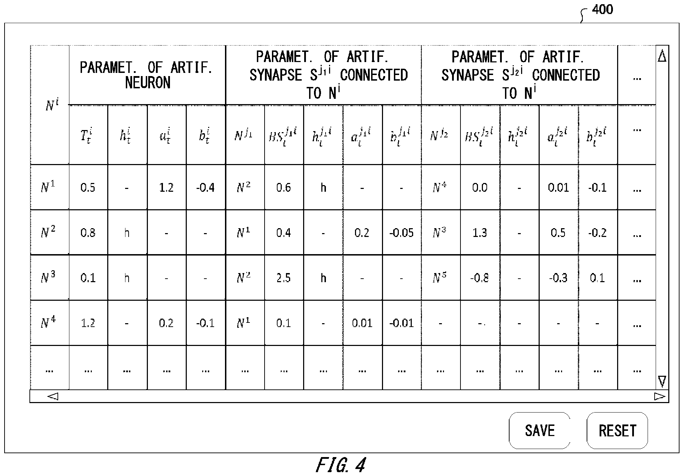

FIG. 4 schematically shows a parameter edit screen displayed on the user terminal 100. The user terminal 100 displays parameters that a user can edit among parameters at a clock time t received from the server 200.

For each Nⁱ, the parameter edit screen 400 includes entry fields for inputting values to each of a threshold and increase-decrease parameter of Nⁱ, and discrimination information, coefficient of connection and increase-decrease parameter of all the artificial neurons connected to Nⁱ. Also, the parameter edit screen 400 includes a save button and reset button. The user 30 can input an initial value to each entry field using the input device 106.

If the save button is pressed, the processing unit 102 causes initial values set in the parameter edit screen 400 to be transmitted to the server 200 through the communicating unit 108. In the server 200, the initial values transmitted from the user terminal 100 are stored in the parameter initial values 286 in the storing unit 280. Also, if the reset button of the parameter edit screen 400 is pressed, the processing unit 102 sets values set in the entry fields to initial values specified in advance.

In this manner, the processing unit 102 presents, to a user and in a format in which a plurality of rows of the plurality of artificial neurons are associated with a plurality of rows of a table, the parameter values of each artificial neuron of the plurality of artificial neurons and the parameter values of one or more artificial synapses connected to inputs of each artificial neuron. Then, the processing unit 102 accepts a user input to a table for altering the presented parameter values. In this manner, the processing unit 102 can present, to the user 30, parameter values of each artificial neuron of a plurality of artificial neurons and parameter values of one or more artificial synapses connected to inputs of each artificial neuron using a data access structure accessible data unit by data unit, the data unit being collective for each artificial neuron, and can accept inputs of values from the user 30.

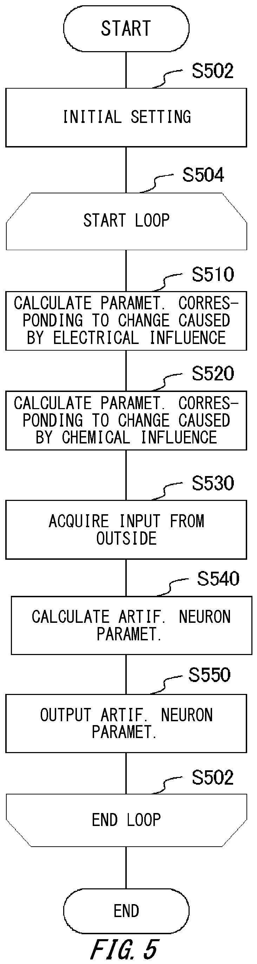

FIG. 5 schematically shows an operation flow of the server 200 performed when the robot 40 is activated or reset. In the server 200, upon reception of information indicating that the robot 40 is activated or reset, the parameter processing unit 240 performs initial setting of parameters of the neural network. For example, the parameter processing unit 240 acquires initial values of parameters from the storing unit 280 to generate parameter data of the neural network in a predetermined data structure (S502). Also, it sets parameter values of the neural network at a clock time to. Upon completion of the initial setting, at S504, it starts a loop about the clock time t.

At S510, the parameter processing unit 240 calculates parameters corresponding to a change due to electrical influence of an artificial synapse at a temporal step tₙ₊₁. Specifically, it calculates BSₜ^{ij} of a given S^{ij}.

At S520, the parameter processing unit 240 calculates parameters corresponding to a change due to chemical influence caused by an endocrine substance at the temporal step tₙ₊₁ (S520). Specifically, changes in parameters of Nⁱ and S^{ij} that the endocrine artificial neuron has influence on are calculated. More specifically, it calculates an increase-decrease parameter or threshold of an output of the artificial neuron Nⁱ that the endocrine artificial neuron has influence on and an increase-decrease parameter of a coefficient of connection or the coefficient of connection of S^{ij} that the endocrine artificial neuron has influence on at the temporal step tₙ₊₁.

At S530, the parameter processing unit 240 acquires an input from the outside of the neural network. Specifically, the parameter processing unit 240 acquires an output of the external input data generating unit 230.

At S540, the parameter processing unit 240 calculates an output of Nⁱ at the temporal step tₙ₊₁. Specifically, it calculates Vⁱmₜₙ₊₁ and a status Sₜₜⁱ. Then, at S550, it stores each parameter value at the clock time tₙ₊₁ in the parameters 288 of the storing unit 280. Also, it transmits each parameter value at the clock time tₙ₊₁ to the user terminal 100.

At S560, the parameter processing unit 240 judges whether or not to terminate the loop. For example, if the clock time represented by the temporal step has reached a predetermined clock time or if it is instructed by the user terminal 100 to stop calculation of parameter update, it is judged to terminate the loop. If the loop is not to be terminated, the process returns to S510, and calculation for a still next temporal step is performed. If the loop is to be terminated, this flow is terminated.

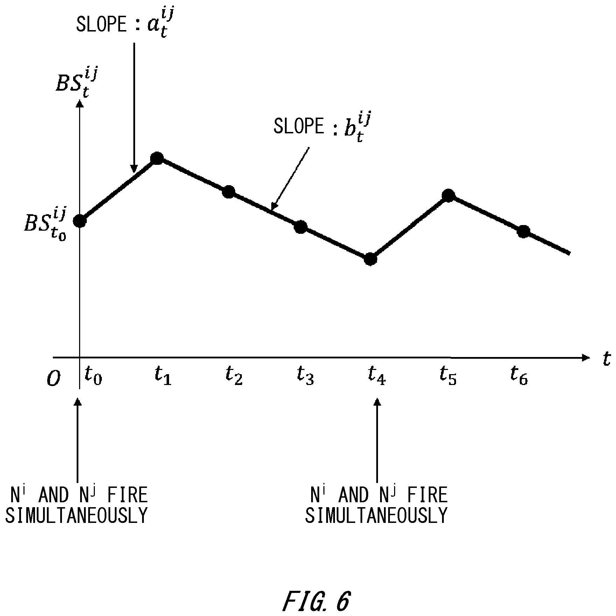

FIG. 6 is a figure for schematically explaining calculation of a coefficient of connection of an artificial synapse. Here, a case where constants a^{ij} and b^{ij} are defined as initial values of increase-decrease parameters is explained.

If both Nⁱ and N^{j} at both ends of S^{ij} are firing at a temporal step of a clock time tₙ, the parameter processing unit 240 calculates BSₜₙ₊₁^{ij} at the clock time tₙ₊₁ according to BSₜₙ₊₁^{ij}=BSₜₙ^{ij}+aₜₙ^{ij}×(tₙ₊₁-tₙ). On the other hand, if both Sⁱ and S^{j} are not firing at the temporal step of the clock time tₙ, it calculates the coefficient of connection BSₜₙ₊₁^{ij} at the clock time tₙ₊₁ according to BSₜₙ₊₁^{ij}=BSₜₙ^{ij}+bₜₙ^{ij}×(tₙ₊₁-tₙ). Also, if BSₜₙ₊₁^{ij} becomes a negative value, BSₜₙ₊₁^{ij} is regarded as 0. Note that for S^{ij} for which BS^{ij} is a positive value, aₜ^{ij} is a positive value and bₜ^{ij} is a negative value. For S^{ij} for which BS^{ij} is a negative value, aₜ^{ij} is a positive value and bₜ^{ij} is a negative value.

Because as shown in FIG. 6, artificial neurons at both ends are simultaneously firing at the clock time to, BSₜ^{ij} increases by aₜ₀^{ij} per unit time. Also, because they are not simultaneously firing at the clock time t1, BSₜ^{ij} decreases by |bₜ₁^{ij}| per unit time. Also, due to simultaneous firing at a clock time t₄, BSₜ^{ij} increases by aₜ₄^{ij} per unit time.

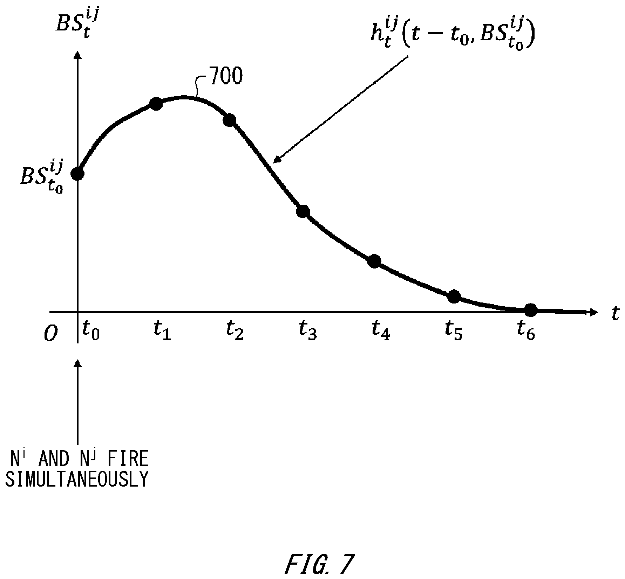

FIG. 7 schematically shows time evolution of a coefficient of connection in a case where a function hₜ^{ij} is defined as an increase-decrease parameter of the coefficient of connection. hₜ^{ij} is defined about time Δt elapsed after t_{cf} (= t-t_{cf}) ≥ 0. hₜ^{ij} is a function of at least Δt, and gives real number values.

A function 700 shown in FIG. 7 is one example of hₜ^{ij}. The function 700 is a function of a coefficient of connection BS_{tcf}^{ij} at a clock time t_{cf} and Δt. The function 700 monotonically increases if Δt is in a range lower than a predetermined value, and monotonically decreases and gradually decreases toward 0 if Δt is larger than the predetermined value. The function 700 gives a value BS_{tcf}^{ij} at Δt=0.

FIG. 7 shows a coefficient of connection in a case where the function 700 is defined as an increase-decrease parameter of the coefficient of connection, and Nⁱ and N^{j} at both ends simultaneously fired at the clock time to. The parameter processing unit 240 calculates BSₜ^{ij} of each clock time of the clock time t₁ to clock time t₆ based on the function 700 and Δt. In a time range of the clock time t₁ to clock time t₆, Nⁱ and N^{j} are not simultaneous firing. Therefore, for example, at and after the clock time t₂, the coefficient of connection monotonically decreases.

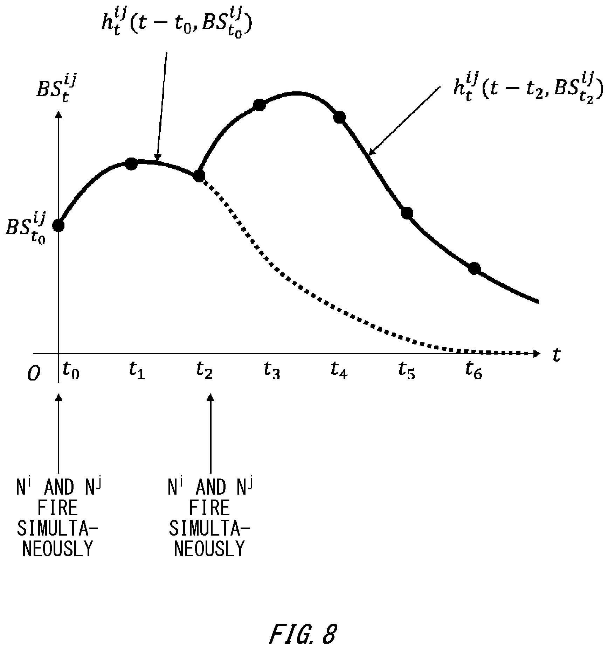

FIG. 8 schematically shows time evolution of a coefficient of connection observed when Nⁱ and N^{j} simultaneously fired further at a clock time t₂. The coefficient of connection is, from the clock time to to clock time t₂, calculated in a similar manner to the manner explained in relation to FIG. 7. If Nⁱ and N^{j} simultaneously fire further at the clock time t₂, the parameter processing unit 240 calculates the coefficient of connection at each clock time of the clock times t₃ to t₆ according to hₜ^{ij} (t-t₂, BSₜ₂^{ij}). In this manner, every time simultaneous firing is repeated, the coefficient of connection rises. Thereby, as in Hebbian theory in a living form, an effect of reinforcing artificial synaptic connection, and so on are attained. On the other hand, as shown in FIG. 6 and FIG. 7, if time during which simultaneous firing does not occur prolongs, an effect of attenuating artificial synaptic connection is attained.

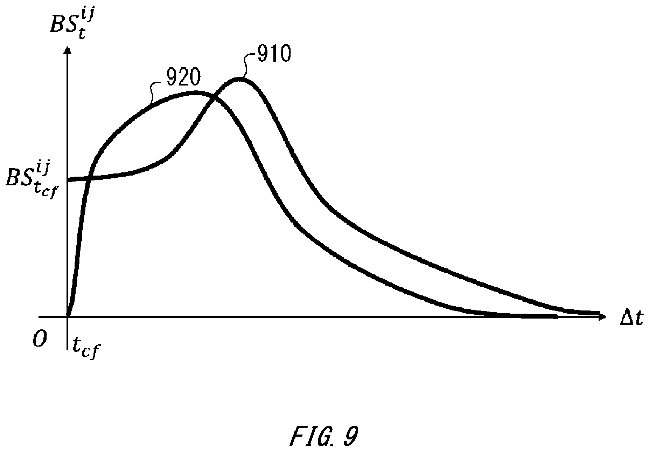

FIG. 9 schematically shows other examples of an increase-decrease function hₜ^{ij} of a coefficient of connection. A function 910 and function 920 each are one example of hₜ^{ij}.

The function 910 is a function of the coefficient of connection BS_{tcf}^{ij} and Δt at the clock time t_{cf}. The function 910 give a value BS_{tcf}^{ij} at Δt=0. Also, the function 910 monotonically increases if Δt is in a range lower than a predetermined value, and monotonically decreases and gradually decreases toward 0 if Δt is larger than the predetermined value.

The function 920 is a function only of Δt. The function 920 gives the value 0 at Δt=0. Also, the function 920 monotonically increases if Δt is in a range lower than a predetermined value, and monotonically decreases and gradually decreases toward 0 if Δt is larger than the predetermined value. In this manner, because according to the present embodiment, hₜ^{ij} can be defined relatively freely, a learning effect can be controlled relatively freely.

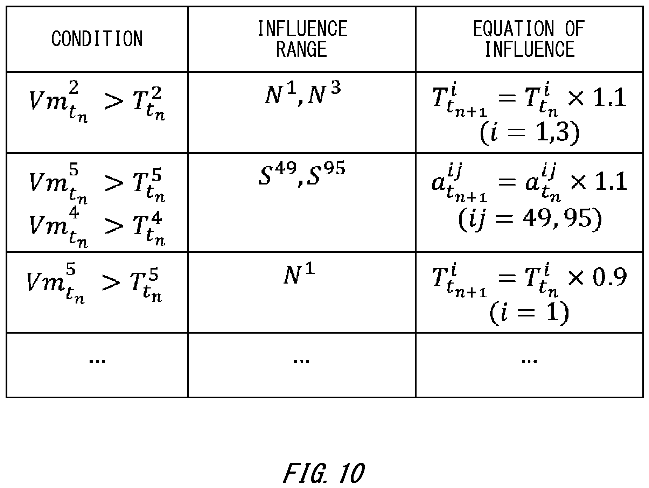

FIG. 10 schematically shows influence definition information defining chemical influence on a parameter. This influence definition information is used in calculation of changes in parameters at S520 in FIG. 5. The definition information includes conditions about an output of an endocrine artificial neuron, information identifying an artificial neuron or artificial synapse to be influenced, and equations specifying influence details.

In the example of FIG. 10, an endocrine artificial neuron N² is an endocrine artificial neuron to which an endocrine substance of sleepiness is allocated. The definition information about the endocrine artificial neuron N² specifies: the condition "Vmₜₙ² > Tₜₙ²"; the "emotion artificial neurons N¹ and N³" as artificial neurons that the endocrine artificial neuron N² has influence on; and "Tₜₙ₊₁ⁱ=Tₜₙⁱ×1.1" as an equation specifying influence details. Thereby, if Vmₜₙ² exceeds Tₜₙ², the parameter processing unit 240 increases thresholds for the emotion artificial neurons N¹ and N³ by 10% at the clock time tₙ₊₁. Thereby, for example, it becomes possible to make it less likely for an emotion artificial neuron to fire if sleepiness occurs. For example, by specifying a neural network in which an output of the concept artificial neuron N⁷, for which "the power storage amount is equal to or lower than a threshold" is defined, is connected to an input of the endocrine artificial neuron N², it becomes possible to embody a phenomenon in which it becomes less likely for an emotion to intensify if the power storage amount lowers.

Also, the endocrine artificial neuron N⁵ is an endocrine artificial neuron to which an endocrine substance of reward system is allocated. Examples of the endocrine substance of reward system may include dopamine and the like. First definition information about the endocrine artificial neuron N⁵ specifies: the condition "Vmₜₙ⁵ >Tₜₙ⁵ and Vmₜₙ⁴>Tₜₙ⁴"; "S⁴⁹ and S⁹⁵" as artificial synapses that the endocrine artificial neuron N⁵ has influence on; and "aₜₙ₊₁^{ij}=aₜₙ^{ij}×1.1" as an equation specifying influence details. Thereby, if Vmₜₙ⁵ exceeds Tₜₙ⁵ and additionally Vmₜₙ⁴ exceeds Tₜₙ⁴, the parameter processing unit 240 increases increase-decrease parameters of the artificial synapse S⁴⁹ and S⁹⁵ by 10% at the clock time tₙ₊₁.

Thereby, when the concept artificial neuron N⁴ for which a situation "a bell rang" is defined is firing if an endocrine artificial neuron of reward system fired, connection between the concept artificial neurons N⁴ and N⁵ through the implicit artificial neuron N⁹ can be strengthened. Thereby, it becomes easier for the endocrine artificial neuron N⁵ of reward system to fire if "a bell rang".

Also, second definition information about the endocrine artificial neuron N⁵ specifies: the condition "Vmₜₙ⁵>Tₜₙ⁵"; "N¹" as an artificial neuron that the endocrine artificial neuron N⁵ has influence on; and "Tₜₙ₊₁ⁱ=Ttₙⁱ×1.1" as an equation specifying influence details. Thereby, if Vmₜₙ⁵ exceeds Tₜₙ⁵, the parameter processing unit 240 lowers the increase-decrease parameter of the artificial neuron N¹ by 10% at the clock time tₙ₊₁. Thereby, it becomes easier for an emotion "pleased" to fire if the endocrine artificial neuron N⁵ of reward system fired.

According to such definitions specifying influence about an endocrine artificial neuron of reward system, an implementation becomes possible in which if an act of charging the robot 40 while ringing a bell is repeated, simply ringing a bell causes the robot 40 to take action representing pleasantness.

Note that the influence definition information is not limited to the example of FIG. 10. For example, as a condition, a condition that an output of an artificial neuron is equal to or lower than a threshold may be defined. Also, a condition about the status of an artificial neuron, for example, a condition about a rising phase, falling phase or unfiring, may be defined. Also, other than directly designating an artificial neuron or artificial synapse, another possible example of the definition of the range of influence may be "all the artificial synapses connected to a particular artificial neuron". Also, if a target is an artificial neuron, as the equation of influence, other than an equation to multiply a threshold by a constant, an equation to add a constant to a threshold or multiply an increase-decrease parameter of an output by a constant may be defined. Also, if a target is an artificial synapse, other than an equation to multiply an increase-decrease parameter by a constant, an equation to multiply a coefficient of connection by a constant may be defined.

The influence definition information is stored in the definition information 284 of the storing unit 280. In this manner, the storing unit 280 stores the influence definition information specifying influence of at least one of an output and firing state of an endocrine artificial neuron on a parameter of at least one of an artificial synapse and another artificial neuron not directly connected to the endocrine artificial neuron by an artificial synapse. Then, the parameter processing unit 240 updates parameters of the at least one of the artificial synapse and the other artificial neuron not directly connected to the endocrine artificial neuron by the artificial synapse based on the at least one of the output and firing state of the endocrine artificial neuron and the influence definition information. Also, parameters of the other artificial neuron that the at least one of the output and firing state of the endocrine artificial neuron has influence on can include at least one of parameters specifying a threshold, firing state and time evolution of an output at the time of firing of the other artificial neuron. Also, parameters of the artificial synapse that the at least one of the output and firing state of the endocrine artificial neuron has influence on can include at least one of parameters specifying a coefficient of connection of the artificial synapse, and time evolution of the coefficient of connection after two artificial neurons connected by the artificial synapse simultaneously fired last time. Also, the influence definition information includes information specifying influence that the firing state of an endocrine artificial neuron related with reward system has on a threshold of an emotion artificial neuron, and the parameter processing unit 240 updates the threshold of the emotion artificial neuron according to the influence definition information if the endocrine artificial neuron fired.

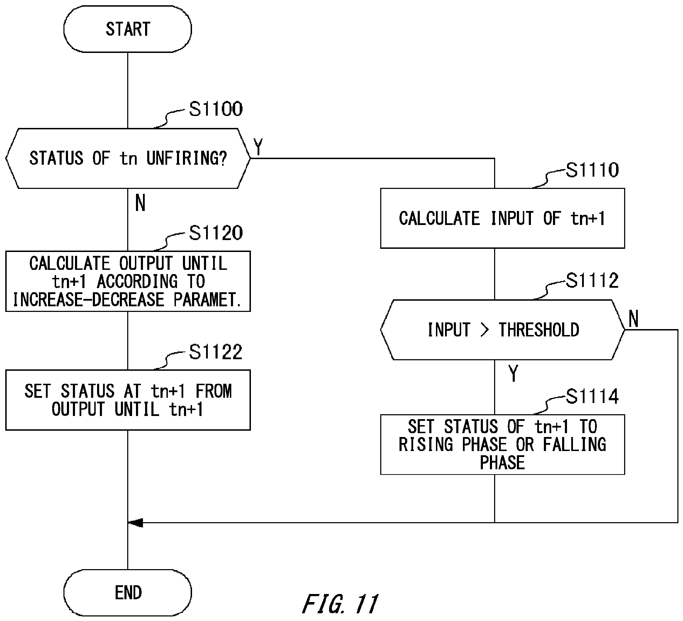

FIG. 11 shows a flowchart about calculation of Vₜₙ₊₁ⁱ and Sₜₙ₊₁ⁱ. The processes in this flowchart can be applied to some of the processes at S540 in FIG. 5. At S1100, the parameter processing unit 240 judges whether or not Sₜₙⁱ indicates unfiring.

If Sₜₙⁱ indicates unfiring, the parameter processing unit 240 calculates an input Iₜₙ₊₁ⁱ to Nⁱ (S1110). Specifically, if an input from the outside of the neural network is not connected to Nⁱ, it is calculated according to Iₜₙ₊₁ⁱ=∑ⱼBSₜₙ₊₁^{ji}×Vmₜₙ^{j}×f(Sₜₙ^{j}). If an input from the outside of the neural network is connected to Nⁱ, it is calculated according to Iₜₙ₊₁ⁱ=∑ⱼBSₜₙ₊₁^{ji}×Vmₜₙ^{j}×f(Sₜₙ^{j})+Eₜₙ₊₁ⁱ. Here, Eₜₙⁱ is an input at the clock time tₙ from the outside of the neural network.

Also, f(S) gives 0 if S is a value representing unfiring, and gives 1 if S is a value indicating a rising phase or falling phase. This model corresponds to a model in which a synapse conveys action potential only if a neuron fired. Note that it may give f(S)=1. This corresponds to a model in which membrane potential is conveyed regardless of the firing state of a neuron.

At S 1112, the parameter processing unit 240 judges whether or not Iₜₙ₊₁ⁱ exceeds Tₜₙ₊₁ⁱ. If Iₜₙ₊₁ⁱ exceeds Tₜₙ₊₁ⁱ, the parameter processing unit 240 calculates Vmₜₙ₊₁ⁱ based on an increase-decrease parameter, sets Sₜₙ₊₁ⁱ to a value indicating a rising phase or falling phase depending on Vmₜₙ₊₁ⁱ (S 1114), and terminates this flow.

At S1100, if Sₜₙⁱ is in a rising phase or falling phase, the parameter processing unit 240 calculates Vmₜₙ₊₁ⁱ (S1120). Then, the parameter processing unit 240 sets Sₜₙ₊₁ⁱ to a value of unfiring if Vmₜⁱ reached Vmin before tₙ₊₁, sets Sₜₙ₊₁ⁱ to a value of a rising phase or falling phase if Vmₜⁱ has not reached Vmin before tₙ₊₁, and terminates this flow. Note that the parameter processing unit 240 sets a value of a falling phase to Sₜₙ₊₁ⁱ if Vmₜⁱ reached Vmax before tₙ₊₁, and sets a value of a rising phase to Sₜₙ₊₁ⁱ if Vmₜⁱ has not reached Vmax before tₙ₊₁.

In this manner, if Nⁱ is firing, an output of Nⁱ is not dependent on an input even if the output becomes equal to or lower than a threshold. Such a time period corresponds to an absolute refractory phase in a neuron of a living form.

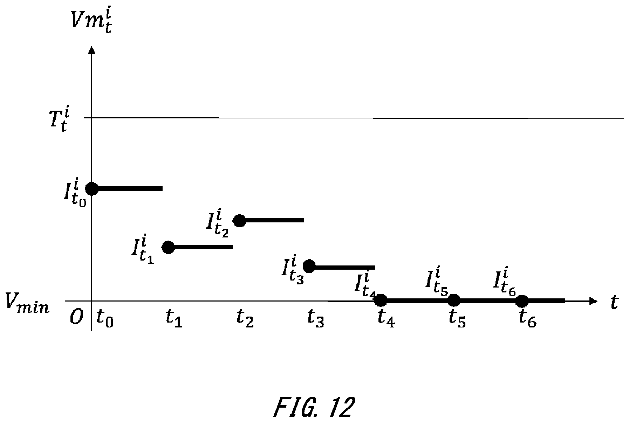

FIG. 12 is a figure for schematically explaining an example about calculation of Vₜⁱ in a case where Nⁱ does not fire.

At the temporal step of the clock time to, Nⁱ is unfiring. If Iₜ₁ⁱ at the clock time t₁ is equal to or lower than Tₜ₁ⁱ, the parameter processing unit 240 calculates Vₜ₁ⁱ at the clock time t₁ according to Vₜ₁ⁱ=Iₜ₁ⁱ, and calculates Vₜⁱ during a time period from the clock times t₀ to t₁ according to Vₜⁱ=Iₜ₀ⁱ. Also, likewise, the parameter processing unit 240 maintains the value of Vₜₙ calculated at the clock time step tₙ until a next clock time step, and changes it to Iₜₙ₊₁ at Vₜₙ₊₁.

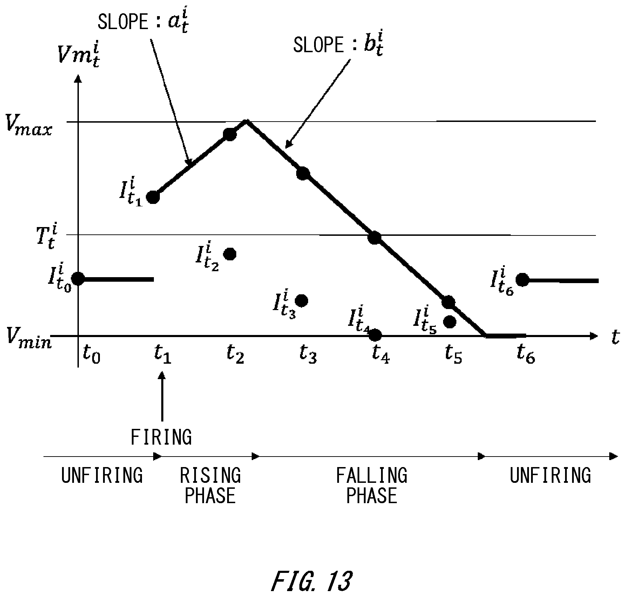

FIG. 13 is a figure for schematically explaining an example about calculation of Vⁱₜ in a case where Nⁱ fires. FIG. 13 shows an example about calculation in a case where constants aⁱ and bⁱ are defined.

At the temporal step of the clock time t₀, Nⁱ is unfiring. If Iₜ₁ⁱ at the clock time t₁ exceeds Tₜ₁ⁱ, the parameter processing unit 240 calculates Vₜ₁ⁱ at the clock time t₁ according to Vₜ₁ⁱ=Iₜ₁ⁱ, and calculates Vₜⁱ during a time period from the clock times t₀ to t₁ according to Vₜⁱ=Iₜ₀ⁱ. Note that it is assumed here that Iₜ₁ⁱ at the clock time t₁ is equal to or lower than Vₘₐₓ. If Iₜ₁ⁱ at the clock time t₁ exceeds Vₘₐₓ, Iₜ₁ⁱ=Vₘₐₓ.

As shown in FIG. 13, at and after the clock time t₁, the parameter processing unit 240 increases Vₜⁱ by aₜ^{ij} per unit time until a clock time when Vₜⁱ reaches Vmax. Also, the parameter processing unit 240 determines the status Sₜⁱ of Nⁱ in this time period as a rising phase.

Also, upon Vₜⁱ reaching Vmax, Vₜⁱ is decreased by |bₜⁱ| per unit time until Vₜⁱ reaches Vmin. Also, the parameter processing unit 240 determines the status of Nⁱ in this time period as a falling phase. Then, upon Vₜⁱ reaching Vmin, Vₜ₆ⁱ at a next clock time is calculated according to Vₜ₆ⁱ=Iₜ₆ⁱ. Also, the status after Vₜⁱ reached Vmin is determined as unfiring.

Note that if the status of Nⁱ is a falling phase, Vₘₜⁱ is not dependent on Iₜⁱ even if the calculated Vmₜⁱ falls below Tₜⁱ. Even if Vmₜⁱ falls below Tₜⁱ, the parameter processing unit 240 calculates Vmₜⁱ according to an increase-decrease parameter until Vmₜⁱ reaches Vmin.

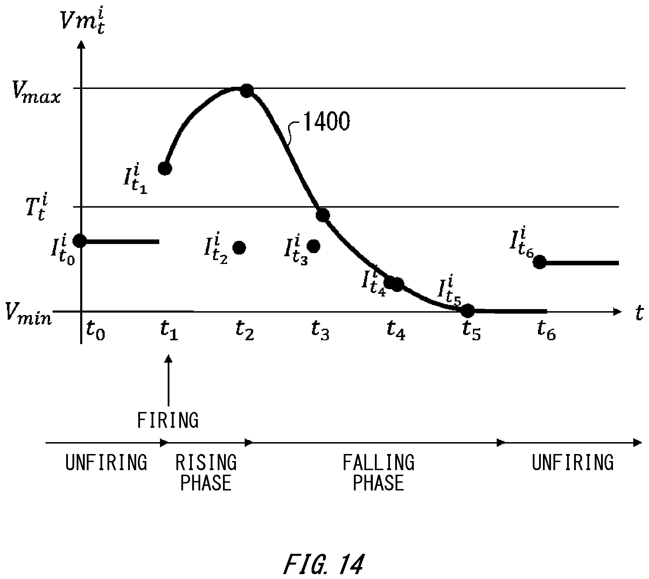

FIG. 14 schematically shows time evolution of a coefficient of connection in a case where a function hₜⁱ is defined as an increase-decrease parameter of Nⁱ. Generally, hₜⁱ is defined about time Δt elapsed after the clock time t_{f} of firing (= t-t_{f}) ≥ 0. hₜⁱ is a function of at least Δt. hₜⁱ gives real number values, and the value range of hₜⁱ is Vmin or higher and Vmax or lower.

A function 1400 shown in FIG. 14 is one example of hₜⁱ. The function 1400 is a function of Vm_{tf}ⁱ and Δt at the clock time t_{f}. The function 1400 monotonically increases if Δt is in a range lower than a predetermined value, and monotonically decreases if Δt is larger than the predetermined value. The function 1400 gives a value Vm_{tf}ⁱ at Δt=0.

FIG. 14 shows an output in a case where the function 1400 is defined as an increase-decrease parameter of the output and Nⁱ fired at the clock time t₁. The parameter processing unit 240 calculates Vmₜⁱ of each clock time of the clock time t₁ to clock time t₅ based on the function 1400, Δt and Vm_{f}ⁱ. Because Vmₜⁱ has reached Vmin at the clock time t₅, Vmₜⁱ=Iₜ₆ⁱ at the clock time t6.

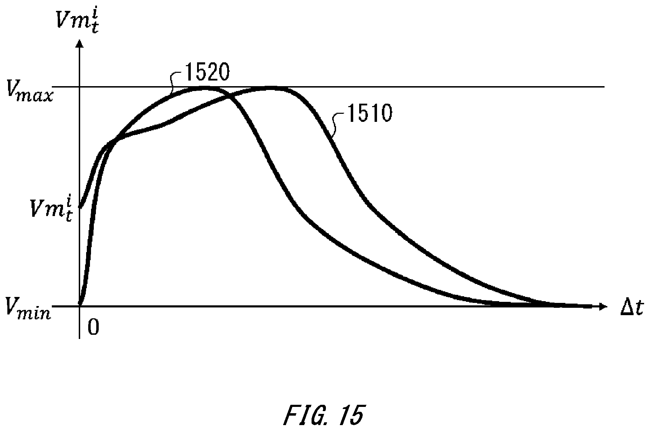

FIG. 15 schematically shows other examples of the function hₜⁱ as an increase-decrease parameter. A function 1510 and function 1520 each are one example of hₜⁱ.

The function 1510 is a function of the output Vm_{tf}ⁱ and Δt at the clock time t_{f}. The function 1510 is a function that gives the value Vm_{tf}ⁱ at Δt=0. Also, the function 1510 is a function that monotonically increases if Δt is in a range lower than a predetermined value, and monotonically decreases if Δt is larger than the predetermined value.

The function 1520 is a function only of Δt. The function 1520 is a function that gives the value Vmin at Δt=0. Also, the function 920 is a function that monotonically increases if Δt is in a range lower than a predetermined value, and monotonically decrease if Δt is larger than the predetermined value.

As explained above, the parameter processing unit 240 can calculate an output modelling on a change in action potential of a neuron. Therefore, rise and fall of an output can be expressed. Also, a change in an output after firing can be relatively freely expressed by an increase-decrease parameter. Thereby, the range of expression of the state can be widened.

Note that as shown in FIG. 6 or other figures, if a^{ij} and b^{ij} are used as increase-decrease parameters, the coefficient of connection changes linearly along with the lapse of time. Also, as shown in FIG. 13 or other figures, if a^{j} and b^{j} are used, the output changes linearly along with the lapse of time. However, coefficients like a^{ij} and b^{ij} may be applied to coefficients of a function other than a linear function. Also, they may be applied as a plurality of coefficient groups to a polynomial, another function or the like. For example, they may be made possible to be defined as coefficient groups such as a₁×Δₜ+a₂×e^{Δt} or b₁×Δₜ²+b₂×Δt⁻¹. Thereby, a relatively wide variety of time evolution can be realized for the coefficient of connection or output. Note that according to such coefficients, a user can change behavior of a neural network relatively easily. With these coefficients also, hysteresis characteristics of the rising phase and falling phase of an output can be implemented relatively easily. On the other hand, by making it possible to define functions of h^{ij} or hⁱ, an implementation that is more closely akin to a firing state of a neuron in a living form and a learning effect in a living form becomes possible.

Note that in a neural network, in some cases, a phenomenon occurs in which a firing state of an artificial neuron is promoted unidirectionally along with the lapse of time. For example, if artificial neurons linked in a loop by strongly connecting artificial synapses are present in a neural network, the artificial neurons linked in the loop fire consecutively, and this causes adjacent artificial neurons in the loop to simultaneously fire respectively and raises the coefficients of connection of the artificial synapses between the artificial neurons; thereby, firing of the artificial neurons may be kept promoted, in some cases. Also, this applies also to a case where a threshold of an artificial neuron lowers due to the influence of firing of another endocrine artificial neuron, and the influenced firing of the artificial neuron promotes firing of the endocrine artificial neuron, and other cases. Also conversely, in a case where an artificial synapse is connected by suppressed connection, in a case where a process to raise a threshold of an artificial neuron in response to firing of an endocrine artificial neuron is defined, or other cases, firing of an artificial neuron is kept suppressed unidirectionally along with the lapse of time, in some cases. In view of this, if the parameter processing unit 240 monitors temporal changes in a firing state of an artificial neuron or a coefficient of connection of an artificial synapse, or the like and detects the presence of an artificial neuron to which a firing state gives positive feedback or negative feedback, it may suppress the firing state being kept promoted unidirectionally by regulating the threshold of the artificial neuron or the coefficient of connection of an artificial synapse. For example, continuous promotion of firing may be suppressed by raising the thresholds of artificial neurons forming a positive feedback system or lowering the coefficients of connection of artificial synapses forming a positive feedback system. Also, continuous suppression of firing may be suppressed by lowering the thresholds of artificial neurons forming a negative feedback system or raising the coefficients of connection of artificial synapses forming a negative feedback system.

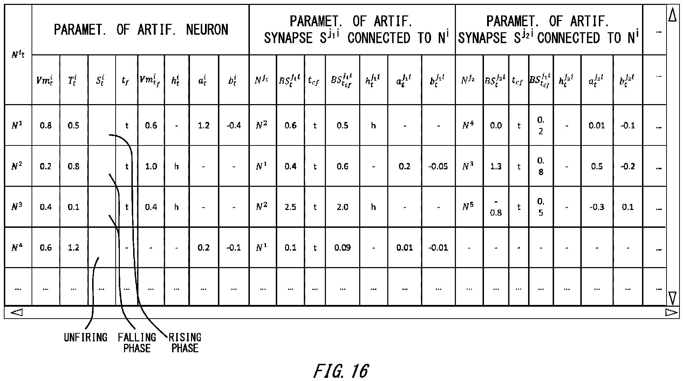

FIG. 16 schematically shows an example of a screen of a parameter viewer displayed by the user terminal 100. The communicating unit 208 transmits, to the user terminal 100 and substantially in real-time, data of parameters updated by the parameter processing unit 240. Upon receiving the data of the updated parameters, the processing unit 102 displays the parameters in a two-dimensional table format. Thereby, a user can confirm on the user terminal 100 parameters the values of which change from moment to moment. In this manner, the processing unit 102 presents, to a user and in a format in which a plurality of rows of the plurality of artificial neurons are associated with a plurality of rows of a table, the parameter values of each artificial neuron of the plurality of artificial neurons and the parameter values of one or more artificial synapses connected to inputs of each artificial neuron that are updated over time.

As shown in FIG. 16 or FIG. 4, displayed artificial neuron parameters include at least one of parameters specifying: threshold; firing state; clock time when firing occurred last time; output; output at a clock time when firing occurred last time; and time evolution of an output at the time of firing. Also, displayed artificial synapse parameters include:
at least one of parameters specifying: a coefficient of connection to a connected artificial neuron; a last simultaneous firing clock time which is a clock time when two artificial neurons that the artificial synapse connects fired simultaneously last time; a coefficient of connection at the last simultaneous firing clock time; and time evolution of a coefficient of connection after simultaneous firing occurred; and
discrimination information of the artificial synapse.

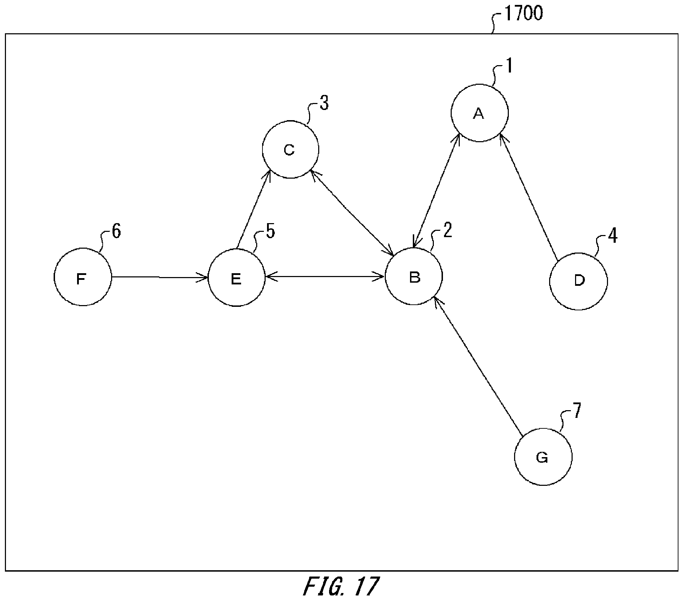

FIG. 17 schematically shows a screen presented if a neural network is to be edited graphically. FIG. 4 showed one example of a screen on which parameters of a neural network are edited in a two-dimensional table format. FIG. 17 provides an environment in which the user 30 can edit parameter more graphically.

FIG. 17 particularly shows one example of a screen for editing an emotion artificial neuron. In FIG. 17, circular objects represent artificial neurons. Characters to represent emotions specified for respective emotion artificial neurons are displayed in the objects. Then, artificial synapses connecting the emotion artificial neurons are represented by lines.

On this edit screen, a user can add or delete artificial neurons, and edit parameters by mouse operation or keyboard operation, for example. Also, a user can add or delete artificial synapses, and edit parameter values by mouse operation or keyboard operation, for example.

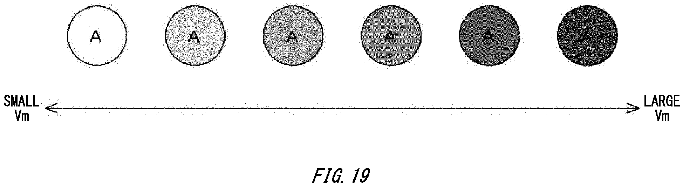

Note that after calculation of a neural network is started, the server 200 causes the user terminal 100 to graphically display a neural network on the basis of the parameter values altered by the parameter processing unit 240. In this case, the connection relation between artificial neurons and artificial synapses of the neural network is displayed graphically in a similar manner to this edit screen. Display examples representing how it appears when parameters are altered are explained in relation to FIG. 19 to FIG. 22.

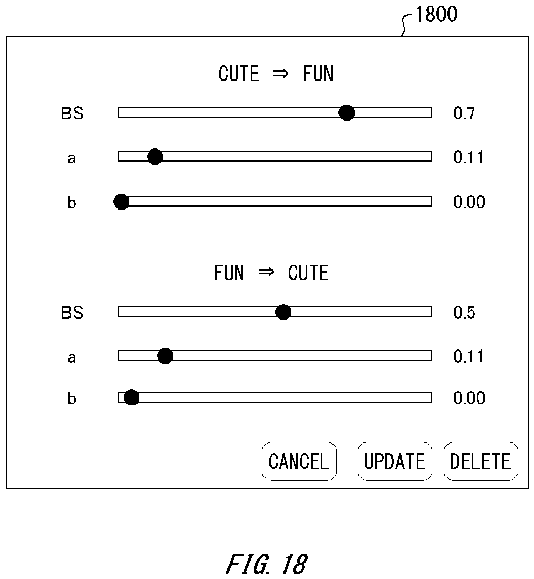

FIG. 18 is one example of an edit screen on which an artificial synapse is edited. If an artificial synapse is right-clicked on an edit screen 1700 shown in FIG. 17, an edit screen 1800 for the artificial synapse is displayed.

The edit screen 1800 includes manipulation portions for altering: meanings specified for two artificial neurons connected by the selected artificial synapse; directions toward which outputs of the artificial neurons are output; the names and current values of the parameters of the artificial synapse; and the parameters. The parameters of the artificial synapse include the initial value of the coefficient of connection, and the initial value of each of increase-decrease parameters a and b. Also, the edit screen includes: a cancel button to instruct to cancel editing; an update button to instruct to update the initial value with the parameter value having been edited; and a delete button to instruct to delete the artificial synapse.

The initial values of parameters of a neural network can be edited visually. Therefore, even an unskilled user can relatively easily edit the neural network.

FIG. 19 schematically shows an example about a display of an output of an artificial neuron. The processing unit 202 causes the user terminal 100 to display objects representing respective artificial neurons Nⁱ while changing their colors based on the magnitudes of Vmₜⁱ of the respective Nⁱ. For example, the processing unit 102 makes the colors in the objects deeper as Vmₜⁱ increases. Thereby, a user can easily recognize changes in outputs of an artificial neuron. Note that the colors in the objects may be made lighter as Vmₜⁱ increases. Not limited to the depth of colors, the brightness of colors, the intensity or colors themselves may be changed depending on Vmₜⁱ.

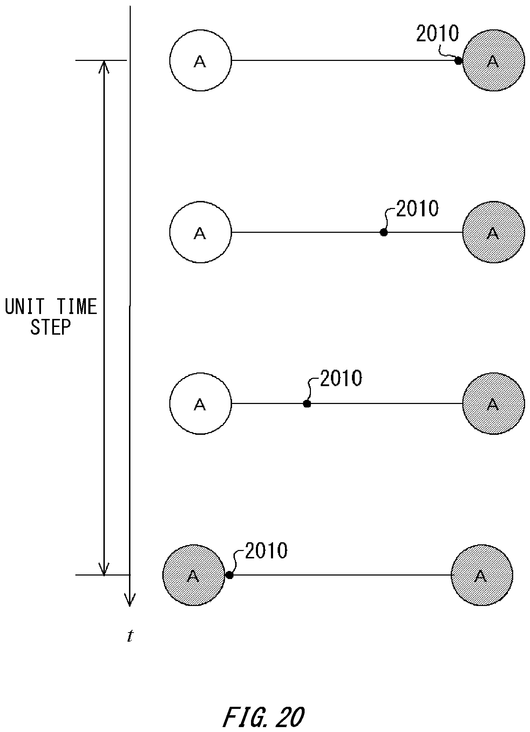

FIG. 20 schematically shows an example about a display showing how it appears when an artificial synapse propagates an electrical signal. The processing unit 202 causes the user terminal 100 to display animation showing propagation of electrical signals based on information about the firing state of each Nⁱ and an artificial synapse connected to the Nⁱ. For example, the processing unit 202 moves, over time, the display position of an object 2010 representing an electrical signal from an artificial neuron on an output side toward an artificial neuron on an input side. Note that the processing unit 202 makes the temporal steps to calculate the position of the object 2010 shorter than the temporal step tₙ₊₁-tₙ of the parameter calculation. Due to such a manner of display, a user can easily understand, for example, which route firing of an artificial neuron follows to lead to firing of another artificial neuron.

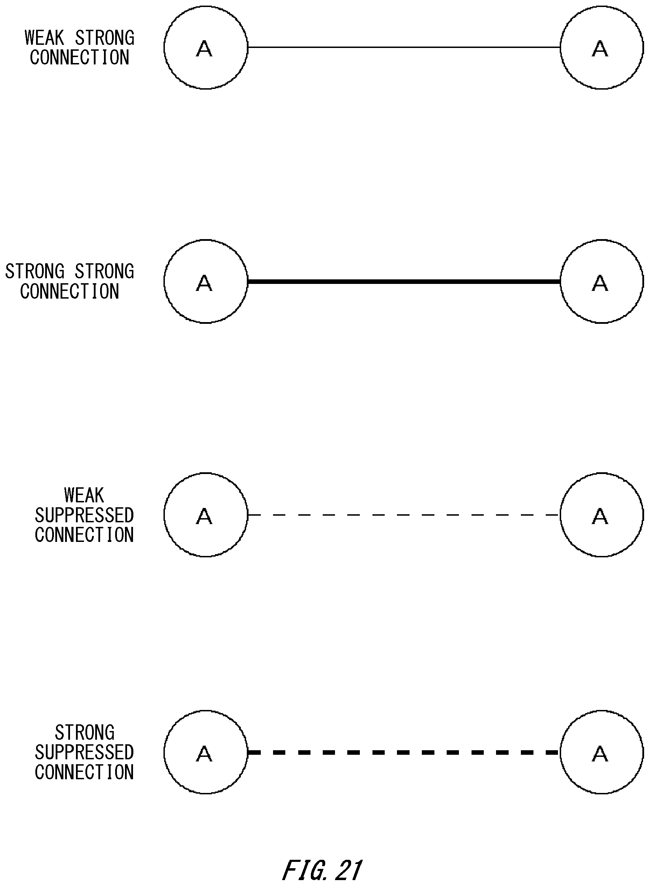

FIG. 21 schematically shows an example about a display of a state where artificial neurons are connected by an artificial synapse. The processing unit 202 causes the user terminal 100 to display whether connection of artificial synapses are strong connection or suppressed connection by changing colors of lines representing artificial synapses based on the symbols of BSₜ^{ij} of each S^{ij}. For example, the processing unit 202 causes the user terminal 100 to display the line representing S^{ij} in blue representing strong connection if BSₜ^{ij} is positive. The processing unit 202 causes the user terminal 100 to display the line representing S^{ij} in red representing suppressed connection if BSₜ^{ij} is negative. Thereby, a user can recognize at a glance whether connection of the artificial synapse is strong connection or suppressed connection.

Also, the processing unit 202 causes the user terminal 100 to display lines representing artificial synapses while changing their widths based on the magnitude of BSₜ^{ij} of each S^{ij}. For example, the processing unit 202 increases the width of a line representing S^{ij} as BSₜ^{ij} increases. Thereby, a user can recognize at a glance the degree of connection between artificial neurons by an artificial synapse.

Note that if bidirectional artificial synapses are defined between artificial neurons, respective artificial synapses may be displayed with separate lines. Also, artificial synapses may be given marks such as arrows representing directions of an input and output of the artificial synapses so that they can be discriminated.

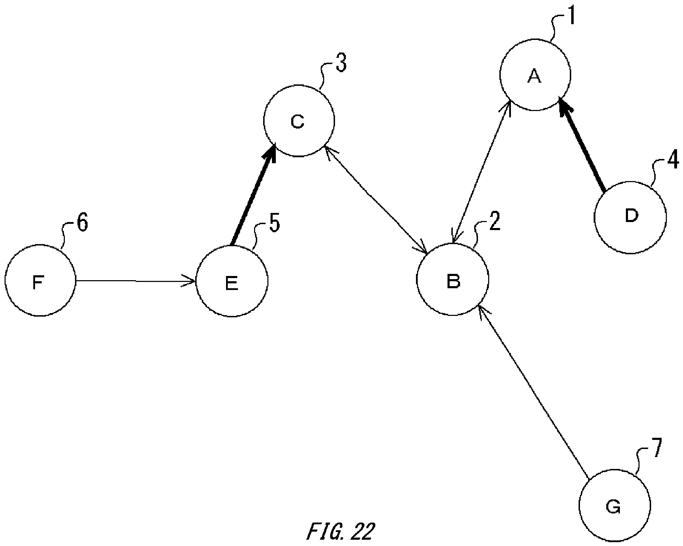

FIG. 22 schematically shows an example about a display of an arrangement of artificial neurons. The processing unit 202 may calculate a distance between each artificial neuron pair based on at least one of BSₜ^{ij} of each S^{ij} and a connection relation between artificial neurons, and display an artificial neuron pair such that the arrangement distance therebetween decreases as their calculated distance decreases.

Here, distances represent the degrees of connection between artificial neurons. The calculated distance between artificial neurons may decrease as the coefficient of connection of an artificial synapse interposed between an artificial neuron pair increases. Also, the calculated distance between an artificial neuron pair may decrease as the number of artificial synapse interposed in series between an artificial neuron pair decreases. Also, the calculated distance between artificial neurons may decrease as the number of artificial synapses interposed in parallel between an artificial neuron pair increases. Also, if one or more artificial neurons are connected between an artificial neuron pair, assuming an average value, minimum value or the like of BSₜ^{ij} of all the artificial synapses interposed in series between an artificial neuron pair as an effective coefficient of connection, a distance may be calculated based on the effective coefficient of connection.

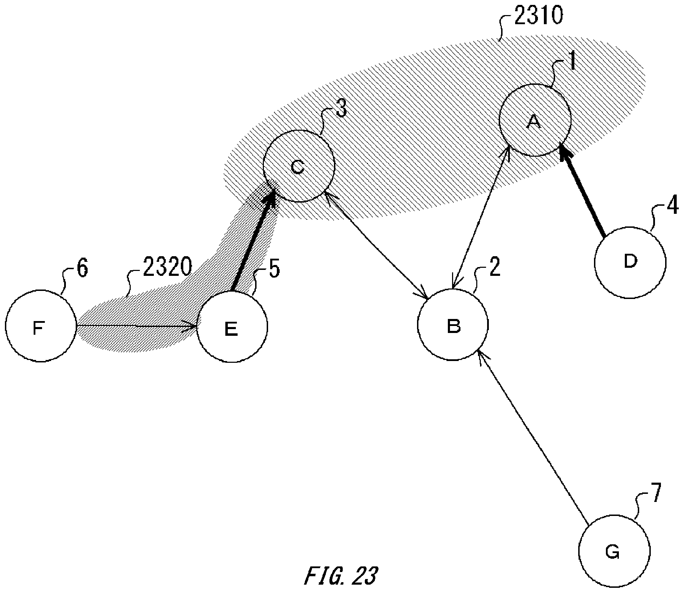

FIG. 23 schematically shows an example about a display of a range of artificial neurons that an endocrine artificial neuron has influence on. If a user designates an object of an endocrine artificial neuron by mouse operation or the like, the processing unit 202 highlights a display of objects of artificial neurons that are influenced by the endocrine artificial neuron represented by the selected object. The processing unit 202 identifies artificial neurons to be influenced based on influence definition information included in the definition information 284.

For example, if an object of N² is selected, the processing unit 202 displays, in red, a range 2310 surrounding N¹ and N³ firing of which is suppressed by N². Also, the processing unit 202 displays, in blue, a range 2320 surrounding lines of artificial synapses and an object influenced by N² in a direction to promote firing. Thereby, a user can easily recognize which artificial neurons or artificial synapses a selected endocrine artificial neuron influences chemically.

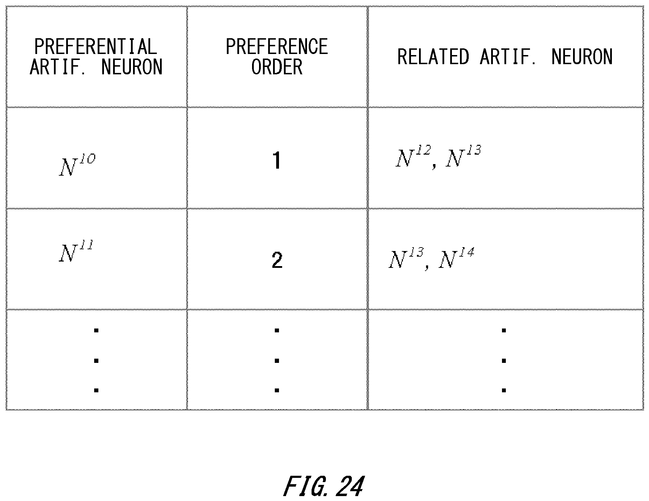

FIG. 24 schematically shows preferential artificial neuron information specifying a preference order of calculation of artificial neuron parameters. In association with information to discriminate a preferential artificial neuron which is an artificial neuron the parameter of which should be calculated preferentially, the preferential artificial neuron information specifies information to identify a value indicating a preference order and a related artificial neuron which is an artificial neuron that influences an input of the preferential artificial neuron. The parameter processing unit 240 selects, according to the preference order, an artificial neuron and artificial synapse the parameters of which are to be updated based on a resource amount available for calculation of parameter update at the server 200.

Note that related artificial neurons may be set at initial setting based on a connection relation of artificial neurons in a neural network. For example, the parameter processing unit 240 sets, as a related artificial neuron, an endocrine artificial neuron that influences a threshold or the like of a preferential artificial neuron. Also, the parameter processing unit 240 may identify one or more artificial neurons that influence an input of a preferential artificial neuron through an artificial synapse and store it in related artificial neurons by following artificial synapses in a reverse order of the input direction of a signal from the preferential artificial neuron.

If a preferential artificial neuron is treated as a parameter update target, the parameter processing unit 240 treats a related artificial neuron corresponding to the preferential artificial neuron as a parameter update target. Here, the parameter processing unit 240 determines an upper limit value of the number of update target artificial neurons the parameters of which are to be treated as update targets, based on an available resource amount at the server 200. Then, the parameter processing unit 240 may determine update target artificial neurons by selecting preferential artificial neurons in a descending order of a preference order so that the number of artificial neurons the parameters of which are to be treated as update targets becomes equal to or smaller than the determined upper limit value.

Then, for example if BSₜₙ₊₁^{ij} is calculated at S510 in FIG. 5, the parameter processing unit 240 updates only a value of BSₜₙ₊₁^{ij} of an artificial synapse connected to an input of an update target artificial neuron, but does not calculate values of BSₜₙ₊₁^{ij} of other artificial synapses and maintains values of their BSₜₙ^{ij}. Likewise, also at S520 and S540, it treats, as update targets, only values of the parameters of the update target artificial neurons and parameter values of artificial synapses connected to inputs of the update target artificial neurons, but does not update values of other parameters and maintains the values. The values of parameters other than parameters of the update target artificial neurons are also maintained.

Thereby, if the amount of resource available at the server 200 becomes small, the update frequency can be maintained high for important artificial neurons. For example, if the amount of resource available at the server 200 becomes small, the function of judging presence or absence of danger can be maintained. Note that if the resource available at the server 200 is abundant, the parameter processing unit 240 may update parameters of all the artificial neurons and all the artificial synapses.

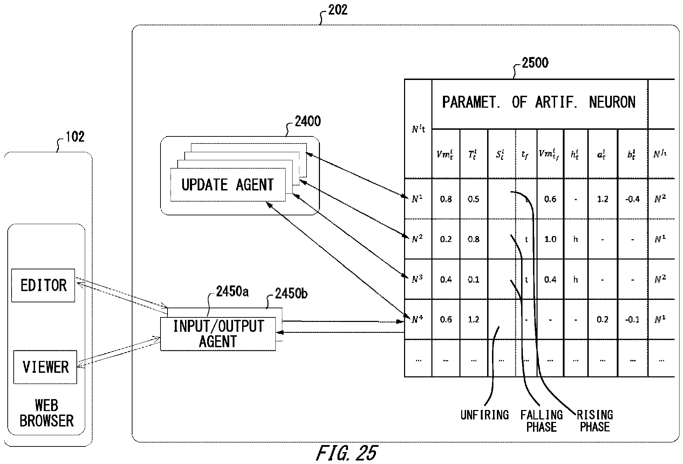

FIG. 25 shows a software architecture according to the system 20. In the explanation above, mainly, details of processes to edit, update and display parameters of artificial neurons and artificial synapse have been explained. Here, matters related to the subject on software to perform each process is explained.

At the server 200, a plurality of update agents 2400 that are in charge of functions of the parameter processing unit 240, and input/output agents 2450a and 2450b that are in charge of data input and output to and from the user terminal 100 are implemented in the processing unit 202. The input/output agent 2450a receives an initial value of a parameter from an editor function unit implemented in the processing unit 102 of the user terminal 100 to perform a process of storing it in the data structure 2500. The input/output agent 2450a performs a process of transmitting, to the user terminal 100, a parameter updated by the parameter processing unit 240 and causing a viewer function unit implemented in the processing unit 102 to display it. The editor function unit and the viewer function unit are implemented in the processing unit 102 for example by a Web browser. Data to be exchanged between the user terminal 100 and the server 200 may be transferred according to the HTTP protocol.

The plurality of update agents 2400 each access the data structure 2500 on an artificial neuron-by-artificial neuron basis to perform calculation of updating a parameter on an artificial neuron-by-artificial neuron basis. The plurality of update agents 2400 each can access the data structure 2500 storing a parameter of a neural network. Also, the plurality of update agents 2400 each can perform calculation of updating parameters. Processes of the plurality of update agents 2400 may be executed respectively by separate processes. Also, the plurality of update agents 2400 may be executed respectively in a plurality of threads in a single process.

The data structure 2500 is generated in a format that is accessible collectively on an artificial neuron-by-artificial neuron basis, in a similar manner to information explained in relation to FIG. 16. The parameter processing unit 240 may generate the data structure 2500 in a memory in the processing unit 202 in an initial process of S502 in FIG. 5. The data structure 2500 has a structure that is accessible data unit by data unit, the data unit being collective for a value of each artificial neuron parameter of a plurality of artificial neurons and parameter values of one or more artificial synapses connected to inputs of each artificial neuron. Then, the update agent 2400 accesses, for each artificial neuron of a plurality of artificial neurons and through the data structure 2500, a value of each artificial neuron parameter of the plurality of artificial neurons and parameter values of one or more artificial synapses connected to inputs of each artificial neuron, and updates, over time, the value of each artificial neuron parameter of the plurality of artificial neurons and the parameter values of the one or more artificial synapses connected to the input of each artificial neuron. Therefore, the plurality of update agents 2400 can perform in parallel a process of updating parameter values over time.

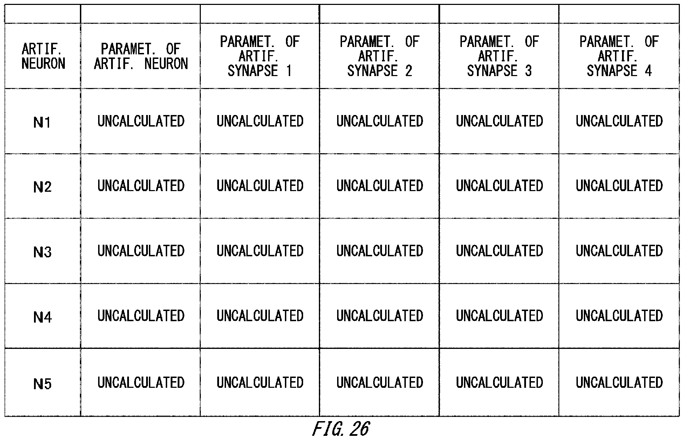

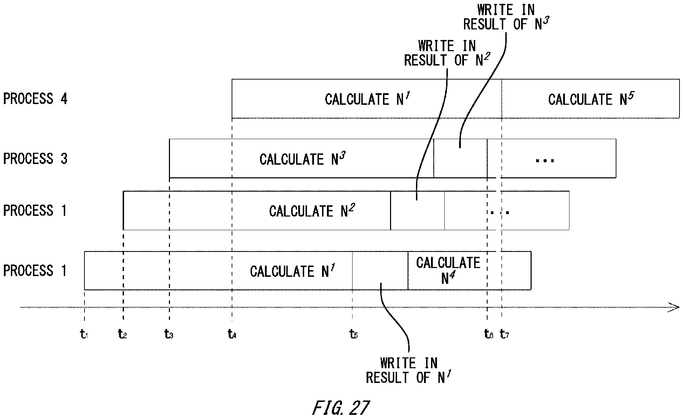

FIG. 25 to FIG. 27 show methods of performing processes of updating parameter values in parallel by multiprocessing. If it is performed in parallel in a plurality of processes, the data structure 2500 may be formed in a memory region reserved as a shared memory. FIG. 26 schematically shows a state before update calculation is performed on a plurality of artificial neurons. Four processes 1 determine separately for which artificial neuron parameter calculation is to be performed. As shown in FIG. 27, at a clock time t1, a process 1 reads out uncalculated data in the row of N¹ and starts calculation of updating parameters of N¹. At a clock time t2, a process 2 reads out uncalculated data in the row of N² and starts calculation of updating parameters of N². At a clock time t3, a process 3 reads out uncalculated data in the row of N³ and starts calculation of updating parameters of N³. At a clock time t4, a process 4 reads out uncalculated data in the row of N¹ and starts calculation of updating parameters of N¹.

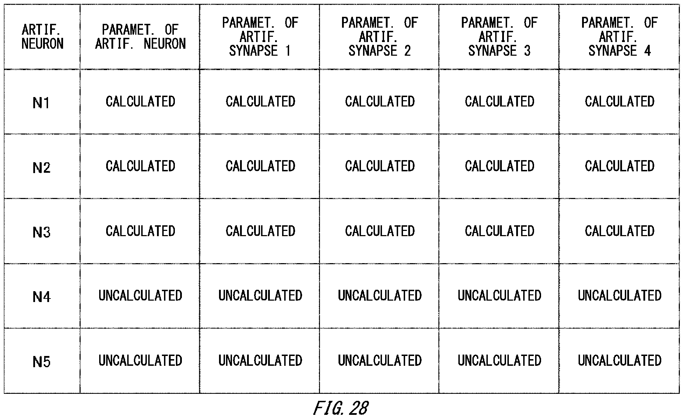

At a clock time 5, upon completion of calculation of the parameters of N¹, the process 1, after confirming that the parameters of N¹ are uncalculated, locks the data in the row of N¹ and writes in the calculation result, and unlocks the data in the row of N¹. At the clock time t5, the process 1 locks the data in the row of N¹, writes in the calculation result and unlocks the data in the row of N¹. Likewise, upon completion of calculation about each artificial neuron, the process 2 and the process 3 also write in the calculation results in the data in the row of each artificial neuron. FIG. 28 schematically shows a calculation state at a clock time t6.

Here, with reference to FIG. 26, at a clock time t7, upon completion of calculation of parameters of N¹, the process 4 judges whether the parameters of N¹ are uncalculated. If the process 4 recognizes that the parameters of N¹ have been calculated, it discards the calculation result of N¹ performed by the process 4. Next, the process 4 judges that N⁵ is uncalculated, reads out data in the row of N⁵, and starts calculation of updating parameters of N⁵.

In this manner, according to the data structure 2500, an implementation is possible in which, by multiprocessing, an uncalculated artificial neuron is selected for each process and calculation is started, and only a process that has completed the calculation earliest writes in its calculation result.

Note that a process similar to a process, by each of the above-mentioned processes, of separately selecting an artificial neuron and calculating a related parameter can be applied to each of S510, S520, and S540 in FIG. 5. For example, for S510 in FIG. 5, a similar process can be performed by treating not an artificial neuron but an artificial synapse as a target of selection and calculation.

Also, according to multiprocessing, the process of S510 and process of S520 in FIG. 5 can be performed in parallel. In this case, a final calculation result may be generated by integrating calculation results that are obtained by parallel processing. Also, if a certain process is performing the process of S520, in another process, an artificial neuron not influenced by a change due to chemical influence may be selected, and the process of S540 in FIG. 5 may be performed.

Also, a similar process can be performed not only by multiprocessing, but also in a multithread system. In the multithread system, the similar process may be realized by replacing the process of each of the above-mentioned processes with each thread.

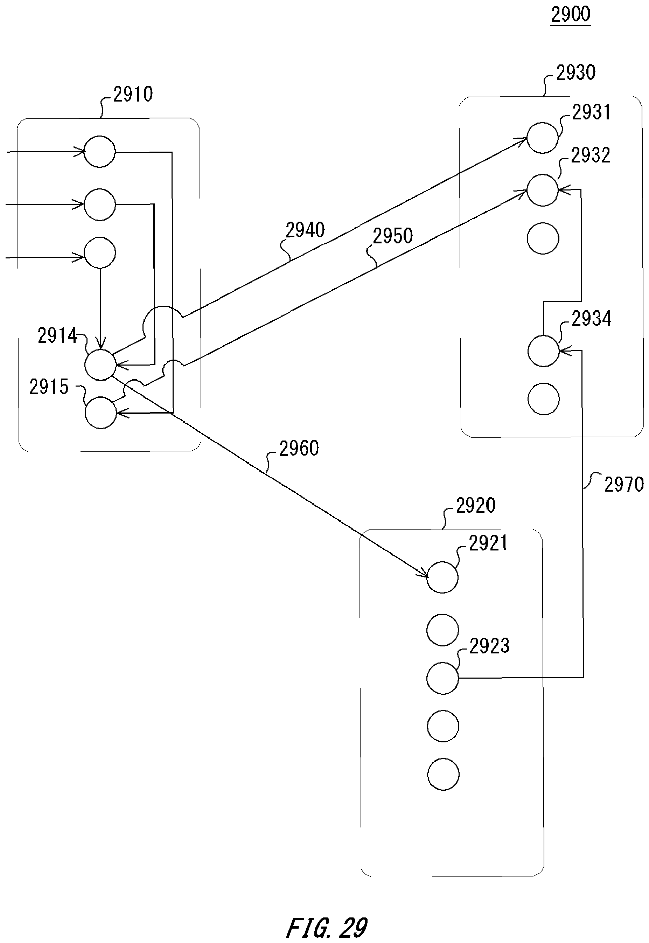

FIG. 29 schematically shows a configuration of a neural network for performing control in a distributed manner among subsystems. In the above-mentioned embodiment, the single server 200 realizes processes of a neural network. Here, an example in which a single neural network 2900 is constructed by three independent servers is shown.

The neural network 2900 is formed of a sub neural network 2910, a sub neural network 2920 and a sub neural network 2930. Calculation for the sub neural network 2910, the sub neural network 2920 and the sub neural network 2930 is performed by mutually different servers.

Here, an artificial neuron 2914 of the sub neural network 2910 is an artificial neurons for which the same concept as an artificial neuron 2921 of the sub neural network 2920 and an artificial neuron 2931 of the sub neural network 2930 is defined. Also, an artificial neuron 2923 of the sub neural network 2920 is an artificial neuron for which the same concept as an artificial neuron 2934 of the sub neural network 2930 is defined. Also, an artificial neuron 2925 of the sub neural network 2910 is an artificial neuron for which the same concept as an artificial neuron 2932 of the sub neural network 2930 is defined.

The artificial neuron 2914 is connected to the artificial neuron 2931 by an artificial synapse 2940. Also, the artificial neuron 2914 is connected to the artificial neuron 2921 by an artificial synapse 2960. Also, the artificial neuron 2915 is connected to the artificial neuron 2932 by an artificial synapse 2950. Also, the artificial neuron 2923 is connected to the artificial neuron 2934 with an artificial synapse 2970. The artificial synapse 2940, the artificial synapse 2950, the artificial synapse 2960 and the artificial synapse 2970 are realized by communication through a network.

For example, if the artificial neuron 2915 is an concept artificial neuron for which a situation "there is Mr. A in sight" is defined, the artificial neuron 2932 is also a concept artificial neuron for which a situation "there is Mr. A in sight" is defined. If the artificial neuron 2915 fires, an output of the artificial neuron 2915 is transmitted from the sub neural network 2910 to the sub neural network 2930 through a network.

Note that a plurality of artificial neurons constituting a sub neural network that should be constructed by a single server preferably have shorter inter-artificial neuron distances than a distance specified in advance. Also, a neural network may be divided into sub neural networks on a function-by-function basis. For example, the sub neural network 2910 may be a neural network of a function part that is in charge of spatial recognition on the basis of a camera image.

Note that the respective sub neural networks may perform processes of a neural network asynchronously. Also, if in a first sub neural network, it is detected that the possibility that an output received from a second sub neural network is erroneous is high , a server to perform the process of the first sub neural network may inform a server to perform the process of the second sub neural network that the output is erroneous. For example, if an output indicating that "there is Mr. B in sight" is acquired suddenly after there are consecutive outputs indicting that "there is Mr. A in sight", it may be judged that the output is erroneous.

If an error in an output is informed, in the second sub neural network, an output of a clock time when the error is informed may be calculated again, and may be output to the first sub neural network. At this time, in the second sub neural network, a calculation result that is most likely to be accurate and output earlier may be excluded, and a calculation result that is second most likely to be accurate may be output.

Note that if the neural network according to the above-mentioned embodiment is seen as an electrical circuit, operation of the neural network realized by processes of the above-mentioned server 200 or the server explained in relation to FIG. 29 can be seen as operation of an analog computer. For example, an output of an artificial neuron in a neural network may be seen as voltage of a corresponding part in an electrical circuit of the analog computer. Other than this, a signal conveyed by an artificial synapse can be seen as electrical current, a coefficient of connection of an artificial synapse can be seen as a resistance of a corresponding electrical circuit, and an increase-decrease parameter or equation of an output of an artificial neuron can be seen as circuit characteristics. Also, manipulation of graphically altering connection of a neural network according to the above-mentioned embodiment corresponds to manipulation of manually switching connection of devices of the analog computer. Also, giving an input to a neural network, altering a parameter, and so on correspond to applying voltage to an electrical circuit of the analog computer, altering a value of a potentiometer or the like in the electrical circuit, and so on. Accordingly, to implement the above-mentioned processes of a neural network by means of programming in a von Neumann computer such as the server 200 or a server explained in relation to FIG. 29 is equivalent to implementing an analog computer model of a neural network in a von Neumann computer.

In the embodiments explained above, a server different from the robot 40 is in charge of processes of a neural network. However, the robot 40 itself may be in charge of processes of a neural network.

Note that the robot 40 is one example of an electronic device to be a control target. The electronic device to be a control target is not limited to the robot 40. Various electronic devices can be applied as control targets.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

20: system
30: user
40:robot
90: communication network
100: user terminal
50: robot
102: processing unit
104: display unit
106: input device
108: communicating unit
152: processing unit
155: control target
156: sensor unit
158: communicating unit
200: server
202: processing unit
208: communicating unit
210: initial value setting unit
230: external input data generating unit
240: parameter processing unit
250: operation determining unit
280: storing unit
282: action determination rule
284: definition information
286: parameter initial values
288: parameters
300: neural network
301, 302, 303, 304, 305, 306, 307, 308, 309, 310: artificial synapse
400: parameter edit screen
700, 910, 920: function
1400, 1510, 1520: function
1700: edit screen
1800: edit screen
2010: object
2310: range
2320:range
2400: update agent
2450: input/output agent
2500: data structure
2900: neural network
2910: sub neural network
2914, 2915: artificial neuron
2920: sub neural network
2921, 2923, 2925: artificial neuron
2930: sub neural network
2931, 2932, 2934: artificial neuron
2940, 2950, 2960, 2970: artificial synapse

## Claims

1. A processing system that processes parameters of a plurality of artificial neurons and a plurality of artificial synapses that constitute a neural network, the processing system comprising:
a storing unit that stores definition information defining a state of a control target for each artificial neuron of the plurality of artificial neurons;
a processing unit that processes parameter values of each artificial neuron of the plurality of artificial neurons and parameter values of one or more artificial synapses connected to inputs of each artificial neuron using a data access structure accessible data unit by data unit, the data unit being collective for each artificial neuron; and
an operation determining unit that determines operation of the control target based on: an activation state of at least some artificial neurons of the plurality of artificial neurons specified by parameter values of the at least some artificial neurons; and a state defined by the at least some artificial neurons.

2. The processing system according to claim 1, wherein
a process performed by the processing unit includes:
updating parameter values of the plurality of artificial neurons and the artificial synapses for each artificial neuron;
presenting, to a user, current parameter values of the plurality of artificial neurons and the artificial synapses collectively for each artificial neuron; and
presenting, to a user, parameter values of the plurality of artificial neurons and the artificial synapses collectively for each artificial neuron, and accepting an input of a parameter value from the user.

3. The processing system according to claim 1 or 2, wherein
the processing unit:
presents, to a user and in a format in which a plurality of rows of the plurality of artificial neurons are associated with a plurality of rows of a table, parameter values of each artificial neuron of the plurality of artificial neurons and parameter values of one or more artificial synapses connected to inputs of each artificial neuron; and
accepts a user input to the table for altering the presented parameter values.

4. The processing system according to any one of claims 1 to 3, wherein
the processing unit:
generates a data structure that is accessible data unit by data unit, the data unit being collective for parameter values of each artificial neuron of the plurality of artificial neurons and parameter values of one or more artificial synapses connected to inputs of each artificial neuron; and
accesses, for each artificial neuron of the plurality of artificial neurons and through the data structure, parameter values of each artificial neuron of the plurality of artificial neurons and parameter values of one or more artificial synapses connected to inputs of each artificial neuron, and updates, over time, parameter values of each artificial neuron of the plurality of artificial neurons and parameter values of one or more artificial synapses connected to inputs of each artificial neuron.

5. The processing system according to claim 4, wherein
the processing unit presents, to a user and in a format in which a plurality of rows of the plurality of artificial neurons are associated with a plurality of rows of a table, parameter values of each artificial neuron of the plurality of artificial neurons and parameter values of one or more artificial synapses connected to inputs of each artificial neuron that are updated over time.

6. The processing system according to any one of claims 1 to 5, wherein
parameters of the artificial neurons include at least one of parameters specifying: a threshold; an activation state; a clock time when activation occurred last time; an output, an output at a clock time when activation occurred last time; and time evolution of an output at the time of activation,
parameters of the artificial synapses include:
at least one of parameters specifying: a coefficient of connection to a connected artificial neuron; a simultaneous activation clock time which is a clock time when two artificial neurons connected by the artificial synapse are simultaneously activated last time; a coefficient of connection at the simultaneous activation clock time; and time evolution of a coefficient of connection after simultaneous activation occurred; and
discrimination information of the artificial synapse.

7. The processing system according to any one of claims 1 to 6, wherein
the plurality of artificial neurons include an endocrine artificial neuron which is an artificial neuron for which a state of generation of an endocrine substance is defined,
the storing unit further stores influence definition information specifying influence of at least one of an output and activation state of the endocrine artificial neuron on a parameter of at least one of an artificial synapse and another artificial neuron not directly connected to the endocrine artificial neuron by an artificial synapse, and
based on the at least one of the output and activation state of the endocrine artificial neuron and the influence definition information, the processing unit updates the parameter of the at least one of the artificial synapse and the other artificial neuron not directly connected to the endocrine artificial neuron by the artificial synapse.

8. The processing system according to claim 7, wherein
the parameter of the other artificial neuron which the at least one of the output and activation state of the endocrine artificial neuron has influence on includes at least one of parameters specifying a threshold, activation state, and time evolution of an output at the time of activation of the other artificial neuron, and
the parameter of the artificial synapse which the at least one of the output and activation state of the endocrine artificial neuron has influence on includes at least one of parameters specifying a coefficient of connection of the artificial synapse, and a time evolution of a coefficient of connection after two artificial neurons connected by the artificial synapse are simultaneously activated last time.

9. The processing system according to claim 7 or 8, wherein
the plurality of artificial neurons further include an emotion artificial neuron which is an artificial neuron for which a current emotion of the control target is defined,
the influence definition information includes information specifying influence that an activation state of an endocrine artificial neuron related to reward system has on a threshold of the emotion artificial neuron, and
the processing unit updates the threshold of the emotion artificial neuron according to the influence definition information if the endocrine artificial neuron is activated.

10. The processing system according to any one of claims 1 to 9, wherein the processing unit updates parameters of some artificial neurons of the plurality of artificial neurons at a higher frequency than an update frequency of parameters of other artificial neurons.

11. The processing system according to claim 10, wherein the processing unit updates the parameters of the some artificial neurons at a higher frequency than an update frequency of parameters of other artificial neurons if a resource amount available for arithmetic operation at the processing system is smaller than a value specified in advance.

12. The processing system according to claim 10 or 11, wherein
a preference order is allocated in advance to the plurality of artificial neurons, and
the processing unit selects, from the plurality of artificial neurons and according to the preference order, some artificial neurons parameters of which can be updated within a range of a resource amount available for arithmetic operation at the processing system, and updates the parameters of the selected some artificial neurons at a higher frequency than an update frequency of parameters of other artificial neurons.

13. The processing system according to any one of claims 1 to 12, wherein
the neural network includes one or more undefined artificial neurons which are artificial neurons for which states of the control target are not defined, and
if an endocrine artificial neuron related to reward system is activated, the processing unit increases a coefficient of connection of an artificial synapse connected to one or more undefined artificial neurons that connect, among the undefined artificial neurons, the endocrine artificial neuron and another artificial neuron which is simultaneously in an activated state with the endocrine artificial neuron.

14. The processing system according to claim 13, wherein among routes that connect the endocrine artificial neuron related to reward system and another artificial neuron that is simultaneously in an activated state with the endocrine artificial neuron, the processing unit more preferentially selects a route with a shorter distance between artificial neurons that is calculated taking into consideration a coefficient of connection of an artificial synapse connected to the undefined artificial neuron, and increases a coefficient of connection of an artificial synapse connected to a undefined artificial neuron that provides the selected route.

15. A program for causing a computer to function as the processing system according to any one of claims 1 to 14.
